(19) Europäisches Patentamt
European Patent Office
Office européen des brevets

(11) **EP 3 447 441 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(51) Int Cl.:
*G01B 9/02* *(2006.01)*    *G01B 11/02* *(2006.01)*
*G01S 17/10* *(2020.01)*    *G01S 17/36* *(2006.01)*

(21) Anmeldenummer: **18184096.8**

(22) Anmeldetag: **18.07.2018**

(54) **VORRICHTUNG ZUR INTERFEROMETRISCHEN ABSTANDSMESSUNG**

DEVICE FOR INTERFEROMETRIC DISTANCE MEASUREMENT

DISPOSITIF DE MESURE DE DISTANCE INTERFÉROMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2017 DE 102017213258**

(43) Veröffentlichungstag der Anmeldung:
**27.02.2019 Patentblatt 2019/09**

(73) Patentinhaber: **Dr. Johannes Heidenhain GmbH 83301 Traunreut (DE)**

(72) Erfinder:
• **MEISSNER, Markus**
**83236 Übersee (DE)**
• **HOLZAPFEL, Wolfgang**
**83119 Obing (DE)**

(56) Entgegenhaltungen:
CN-B- 103 107 478    RO-A2- 130 868
US-A- 5 469 265    US-B1- 6 496 266

EP 3 447 441 B1

**Beschreibung**

## GEBIET DER TECHNIK

Die vorliegende Erfindung betrifft eine Vorrichtung zur interferometrischen Abstandsmessung. Insbesondere ist diese Vorrichtung geeignet zur Bestimmung absoluter Abstände zwischen zwei zueinander beweglichen Objekten.

## STAND DER TECHNIK

Zur interferometrischen Bestimmung absoluter Abstände zwischen zwei zueinander beweglichen Objekten sind Mehrwellenlängen-Verfahren bekannt. Aus der Differenzbildung der Interferenzphasen unterschiedlicher Wellenlängen werden dabei ein oder mehrere Schwebungsphasen bestimmt, die eine eindeutige absolute Positionsbestimmung über einen größeren Abstandsbereich ermöglicht. Entsprechende Vorrichtungen können dabei auch kaskadiert ausgebildet werden und ausgehend von mehreren unterschiedlichen Wellenlängen die Erzeugung mehrerer Schwebungsphasen vorsehen. In Bezug auf derartige Vorrichtungen sei beispielsweise auf die US 6,496,266 B1 verwiesen, in der u.a. ein System mit drei verschiedenen Wellenlängen beschrieben wird, aus denen mehrere Schwebungsphasen bzw. synthetische Wellenlängen abgeleitet und daraus eine Absolutpositions-Information generiert wird.

Zur Erzeugung der erforderlichen Vielzahl von Wellenlängen sind in der genannten Druckschrift insgesamt drei Laser-Lichtquellen in Form stabilisierter He-Ne-Laser vorgesehen, was einen erheblichen apparativen Aufwand darstellt. Hinzu kommt, dass eine aufwändige Justage der Mehrzahl von Lichtquellen erforderlich ist, um sicherzustellen, dass die emittierten Strahlenbündel aller Lichtquellen die identischen Wege im Mess- und Referenzarm des Interferometers durchlaufen. Desweiteren erfordern die drei separaten Laser-Lichtquellen eine Regelung jeder einzelnen Lichtquelle, um zu gewährleisten, dass die Wellenlängen der einzelnen Laser stabil über die Zeit sind und einen definierten Wert haben.

Aus der US 5,469,265 ist ein Signalverarbeitungsverfahren sowie eine entsprechende Schnittstelle bekannt, die es ermöglicht, die Signale einer Mehrzahl von Sensoren auf der Basis von Bragg-Gittern über einen einzigen Kanal zu übertragen.

Die Druckschrift RO 130868 A2 schlägt ein nicht-invasives Verfahren zum Lokalisieren von Schallquellen in einem Medium vor. Hierzu wird eine optoelektronische Sensoranordnung eingesetzt, die mehrere Faserlaser mit Bragg-Gittern umfasst.

Aus der CN 103 107 478 B ist ein Zweiwellenlängen-Faserlaser mit einstellbarer Ausgangsleistung bekannt, der in verschiedenen Anwendungen einsetzbar ist.

## ZUSAMMENFASSUNG DER ERFINDUNG

Der vorliegenden Erfindung liegt die Aufgabe zugrunde, eine Vorrichtung zur absoluten interferometrischen Abstandsmessung anzugeben. Hierbei soll insbesondere ein möglichst geringer Aufwand auf Seiten der verwendeten Lichtquelle resultieren.

Diese Aufgabe wird erfindungsgemäß durch eine Vorrichtung mit den Merkmalen des Anspruchs 1 gelöst.

Vorteilhafte Ausführungen der erfindungsgemäßen Vorrichtung ergeben sich aus den Maßnahmen, die in den abhängigen Ansprüchen aufgeführt sind.

Die erfindungsgemäße Vorrichtung zur interferometrischen Abstandsmessung umfasst eine Mehrwellenlängen-Lichtquelle, die ein Strahlenbündel mit mindestens drei unterschiedlichen Wellenlängen liefert und als Faserlaser ausgebildet ist, der mindestens drei verschiedene Bragg-Gitter umfasst, deren Gitterkonstanten auf die erzeugten Wellenlängen abgestimmt sind. Ferner ist eine Interferometer-Einheit vorgesehen, die das Strahlenbündel in ein Messstrahlenbündel und ein Referenzstrahlenbündel aufspaltet und einen Messreflektor sowie einen stationären Referenzreflektor umfasst, wobei das Messstrahlenbündel in einem Messarm in Richtung des Messreflektors propagiert und dort eine Rückreflexion erfährt und das Referenzstrahlenbündel in einem Referenzarm in Richtung des stationären Referenzreflektors propagiert und dort eine Rückreflexion erfährt. Die vom Mess- und Referenzreflektor zurückreflektierten Mess- und Referenzstrahlenbündel überlagern sich interferierend in einem Interferenzstrahlenbündel. Über eine Detektions-Einheit erfolgt eine Aufspaltung des Interferenzstrahlenbündels dergestalt, dass pro Wellenlänge jeweils mehrere phasenverschobene Teil-Interferenzsignale resultieren. Desweiteren ist eine Signalverarbeitungs-Einheit vorgesehen, die dazu eingerichtet ist, aus den Teil-Interferenzsignalen unterschiedlicher Wellenlängen eine absolute Positionsinformation bezüglich des Messreflektors zu bestimmen.

Es ist möglich, dass die Mehrwellenlängen-Lichtquelle mindestens folgende Komponenten umfasst:

- eine Pump-Lichtquelle,
- mindestens drei Bragg-Gitter, die in ein oder mehrere laseraktive Fasern integriert sind, wobei jedes der Bragg-Gitter einen Phasensprung der Größe π aufweist,

- eine Einkoppeloptik, über die die von der Pump-Lichtquelle emittierte Pumpstrahlung in die mindestens eine laseraktive Faser einkoppelbar ist. Hierbei können die mindestens drei Bragg-Gitter entlang der Fasererstreckungsrichtung vollständig überlappend in der mindestens einen laseraktiven Faser angeordnet sein, so dass die Phasensprünge aller Bragg-Gitter an der gleichen Stelle liegen.

Es ist ferner möglich, dass die mindestens drei Bragg-Gitter entlang der Fasererstreckungsrichtung um bestimmte Versatzabstände zueinander verschoben angeordnet sind, so dass die Phasensprünge aller Bragg-Gitter entlang der Fasererstreckungsrichtung ebenfalls um die Versatzabstände zueinander verschoben sind.

Hierbei kann im Fall dreier Bragg-Gitter und

a) bei Versatzabständen zwischen 0% und 50% der effektiven Gitterlänge eines Bragg-Gitters die laseraktive Faser erste Gitterabschnitte mit Bragg-Gittern mit einer Gitterkonstante, zweite Gitterabschnitte mit zwei überlappenden Bragg-Gittern mit unterschiedlichen Gitterkonstanten sowie dritte Gitterabschnitte mit drei überlappenden Bragg-Gittern mit unterschiedlichen Gitterkonstanten aufweisen, oder
b) bei Versatzabständen zwischen 50% und 100% der effektiven Gitterlänge eines Bragg-Gitters die laseraktive Faser erste Gitterabschnitte mit Bragg-Gittern einer Gitterkonstanten und zweite Gitterabschnitte mit zwei überlappenden Bragg-Gittern mit unterschiedlichen Gitterkonstanten aufweisen, oder
c) bei Versatzabständen von 100% der effektiven Gitterlänge eines Bragg-Gitters die laseraktive Faser ausschließlich Gitterabschnitte mit Bragg-Gittern einer Gitterkonstanten aufweisen.

Vorzugsweise ist die mindestens eine laseraktive Faser als Erbium-dotierte Singlemode-Glasfaser ausgebildet, die Laserstrahlung mit einer definierten Polarisationsrichtung emittiert.

Mit Vorteil ist die mindestens eine laseraktive Faser unter Zug zwischen zwei Fixierungspunkten in einer Faserhalterung angeordnet und die mindestens drei Bragg-Gitter sind im Bereich zwischen den beiden Fixierungspunkten in der Faserhalterung angeordnet.

Es ist möglich, dass eine Regelungseinheit über ein oder mehrere Stellelemente auf die Mehrwellenlängen-Lichtquelle einwirkt, um Laserstrahlung mit definierten Wellenlängen zu erzeugen und wobei als Eingangssignal der Regelungseinheit ein elektrisches Signal fungiert, das aus einem optischen Signal lediglich einer der verschiedenen Wellenlängen abgeleitet ist.

Hierbei können die Stellelemente mindestens eines der folgenden Mittel umfassen:

a) Piezo-Aktuator-Einheit zum Ausüben eines definierten mechanischen Zugs auf die mindestens eine laseraktive Faser
b) Temperierungs-Einheit zum Einstellen einer definierten Temperatur der mindestens einen laseraktiven Faser
c) Stromquelle zum Einstellen eines definierten Pumpstroms einer Pump-Lichtquelle für die mindestens eine laseraktive Faser

Es erweist sich als vorteilhaft, wenn die Mehrwellenlängen-Lichtquelle derart eingerichtet ist, das diese Strahlung mit einer ersten Wellenlänge ($\lambda_1$) und zwei weiteren Wellenlängen ($\lambda_2$, $\lambda_3$) emittiert, wobei für die beiden weiteren Wellenlängen ($\lambda_2$, $\lambda_3$)

$$\lambda_2 = \frac{CAF_1}{CAF_1 \pm 1} \cdot \lambda_1$$

und

$$\lambda_3 = \frac{\lambda_1 \cdot \lambda_2}{\lambda_1 \pm \lambda_2 \cdot \dfrac{CAF_2 \pm 1}{CAF_1 \cdot CAF_2}}$$

gilt, wobei

$$CAF_1 = \frac{\Lambda_1}{\lambda_1} \text{ und } CAF_2 = \frac{\Lambda_3}{\Lambda_1}$$

mit:

$$\lambda_1, \ \lambda_2 \ , \ \lambda_3 \ := \ \text{emittierte Wellenlängen der Mehrwellenlängen-Lichtquelle}$$

$$\Lambda_1 = \left| \frac{\lambda_1 \cdot \lambda_2}{\lambda_1 - \lambda_2} \right| = CAF_1 \cdot \lambda_1$$

$$\Lambda_2 = \left| \frac{\lambda_2 \cdot \lambda_3}{\lambda_2 - \lambda_3} \right|$$

$$\Lambda_3 = \left| \frac{\Lambda_2}{\Lambda_1 - \Lambda_2} \right| \cdot \Lambda_1 = CAF_2 \cdot \Lambda_1$$

Mit Vorteil umfasst die Interferometer-Einheit eine Strahl-Aufspalteinheit, den entlang mindestens einer Messrichtung beweglichen Messreflektor, den stationären Referenzreflektor sowie eine Strahl-Vereinigungseinheit, wobei über die Strahl-Aufspalteinheit die Aufspaltung des Strahlenbündels in ein Mess- und ein Referenzstrahlenbündel erfolgt und über die Strahl-Vereinigungseinheit eine Überlagerung der vom Mess- und Referenzreflektor zurückreflektierten Mess- und Referenzstrahlenbündel zum Interferenzstrahlenbündel erfolgt.

Hierbei ist es möglich, dass die Strahl-Aufspalteinheit und die Strahl-Vereinigungseinheit gemeinsam in einem Strahlteiler-Würfel ausgebildet sind.

Desweiteren kann vorgesehen sein, dass die Detektionseinheit mindestens ein Aufspaltelement, mindestens ein Polarisationselement sowie ein nachgeordnetes Detektorarray bestehend aus mindestens neun optoelektronischen Detektorelementen umfasst. Über das mindestens eine Aufspaltelement und das mindestens eine Polarisationselement erfolgt eine wellenlängenabhängige Aufspaltung des Interferenzstrahlenbündels in mindestens drei Gruppen von Interferenzstrahlenbündeln, wobei jede der mindestens drei Gruppen von Interferenzstrahlenbündeln jeweils mindestens drei phasenverschobene Teil-Interferenzstrahlenbündel umfasst.

Vorzugsweise umfasst die Detektionseinheit zwei Aufspaltelemente, wobei über ein Aufspaltelement eine Aufspaltung in mehrere phasenverschobene Interferenzstrahlenbündel erfolgt und über das andere Aufspaltelement eine wellenlängenabhängige Aufspaltung in mehrere Teil-Interferenzstrahlenbündel erfolgt.

Mit Vorteil ist die Signalverarbeitungseinheit dazu eingerichtet,

- aus den phasenverschobenen elektrischen Teil-Interferenzsignalen der unterschiedlichen Wellenlängen pro Wellenlänge einen Phasenwert zu bestimmen,
- aus den Phasenwerten mehrere Differenzphasen zu bilden, die jeweils unterschiedlichen synthetischen Wellenlängen zugeordnet sind,
- aus einem über eine zusätzliche Grobpositionsmessung gewonnenen Grobpositionssignal sowie den Differenzphasen eine hochauflösende absolute Positionsinformation bezüglich des Messreflektors zu bestimmen.

Als besonders vorteilhaft erweist sich bei der erfindungsgemäßen Vorrichtung, dass der lichtquellenseitige Aufwand zur Erzeugung der Mehrzahl von Wellenlängen erheblich verringert werden kann. Anstelle mehrerer einzelner Lichtquellen ist lediglich eine einzige Lichtquelle vorgesehen, die alle benötigten Wellenlängen für die absolutinterferometrische Positionsbestimmung liefert.

Es ist desweiteren nur die Stabilisierung einer einzigen Wellenlänge nötig, was den erforderlichen Regelungsaufwand für die Lichtquelle erheblich verringert.

Ferner entfällt gegenüber dem Fall mit mehreren separaten Lichtquellen die aufwändige Justage mehrerer Strahlenbündel unterschiedlicher Wellenlängen zu einem einzigen kollinearen Strahlenbündel.

Außerdem gewährleistet die vorgesehene Mehrwellenlängen-Lichtquelle eine äußerst geringe Linienbreite und damit eine große Kohärenzlänge. Für die Positionsmessung hat dies ein geringes Rauschen der erzeugten Positionsmesswerte und damit eine erhöhte Messgenauigkeit zur Folge.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1          eine schematisierte Darstellung eines Ausführungsbeispiels der erfindungsgemäßen Vorrichtung;

Figur 2          eine schematisierte Darstellung der Mehrwellenlängen-Lichtquelle aus der Vorrichtung in Figur 1;

Figur 3          ein Detail aus Figur 2;

Figur 4a - 4d    jeweils eine unterschiedliche Variante bezüglich der Relativ-Anordnung mehrerer Bragg-Gitter in einer laseraktiven Faser;

Figur 5          eine schematisierte Darstellung zur Erläuterung der Regelung der Mehrwellenlängenlichtquelle;

Figur 6          einen Querschnittsdarstellung der laseraktiven Faser in der Mehrwellenlängenlichtquelle, die Strahlung in einer definierten Polarisationsrichtung emittiert;

Figur 7          eine schematisierte Darstellung der Detektionseinheit der erfindungsgemäßen Vorrichtung aus Figur 1;

Figur 8          eine schematisierte Darstellung der Signalverarbeitungseinheit der erfindungsgemäßen Vorrichtung aus Figur 1.

## BESCHREIBUNG DER AUSFÜHRUNGSFORMEN

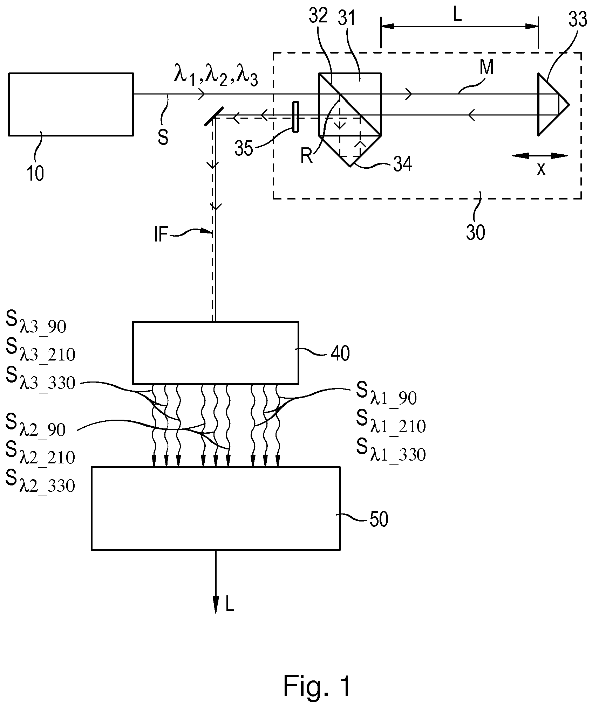

Ein Ausführungsbeispiel der erfindungsgemäßen Vorrichtung zur interferometrischen Abstandsmessung ist in Figur 1 in einer schematisierten Darstellung gezeigt. Die Vorrichtung umfasst eine Mehrwellenlängen-Lichtquelle 10, eine Interferometer-Einheit 30, eine Detektionseinheit 40 sowie eine Signalverarbeitungseinheit 50. Mit Hilfe der erfindungsgemäßen Vorrichtung ist im vorliegenden Ausführungsbeispiel die hochpräzise Messung des absoluten Abstands L zwischen zwei - in der Figur nicht dargestellten - relativ zueinander beweglichen Objekten möglich. Im vorliegenden Beispiel ist eines der beiden Objekte mit dem zur Interferometer-Einheit 30 gehörenden, entlang der Messrichtung x beweglichen Messreflektor 33 verbunden, das andere der beiden Objekte mit den demgegenüber stationär angeordneten anderen Komponenten der Interferometer-Einheit 30.

Bei den beiden Objekten kann es sich beispielsweise um zueinander bewegliche Maschinenteile handeln, deren Absolutabstand L mittels der erfindungsgemäßen Vorrichtung bestimmbar ist. Die mit Hilfe der erfindungsgemäßen Vorrichtung erzeugten Informationen bezüglich des Absolutabstands L können von einer übergeordneten Maschinensteuerung weiterverarbeitet werden.

Desweiteren ist es auch möglich, die erfindungsgemäße Vorrichtung in Laser-Trackern oder Laser-Tracern einzusetzen. In diesem Fall wird der Absolutabstand zwischen den stationären Komponenten der Interferometer-Einheit 30 und dem im Raum beweglichen Messreflektor 33 bestimmt. Derartige Systeme können in Verbindung mit unterschiedlichsten Mess- und/oder Kalibrationsaufgaben eingesetzt werden. Darüber hinaus gibt es natürlich noch weitere Einsatzmöglichkeiten für die erfindungsgemäße Vorrichtung.

Bevor im folgenden anhand der verschiedenen Figuren die einzelnen Komponenten der erfindungsgemäßen Vorrichtung sowie ein geeignetes Verfahren zum Betrieb derselbigen im Detail beschrieben werden, sei zunächst der Grob-Aufbau bzw. das grundsätzliche Funktionsprinzip der entsprechenden Vorrichtung erläutert.

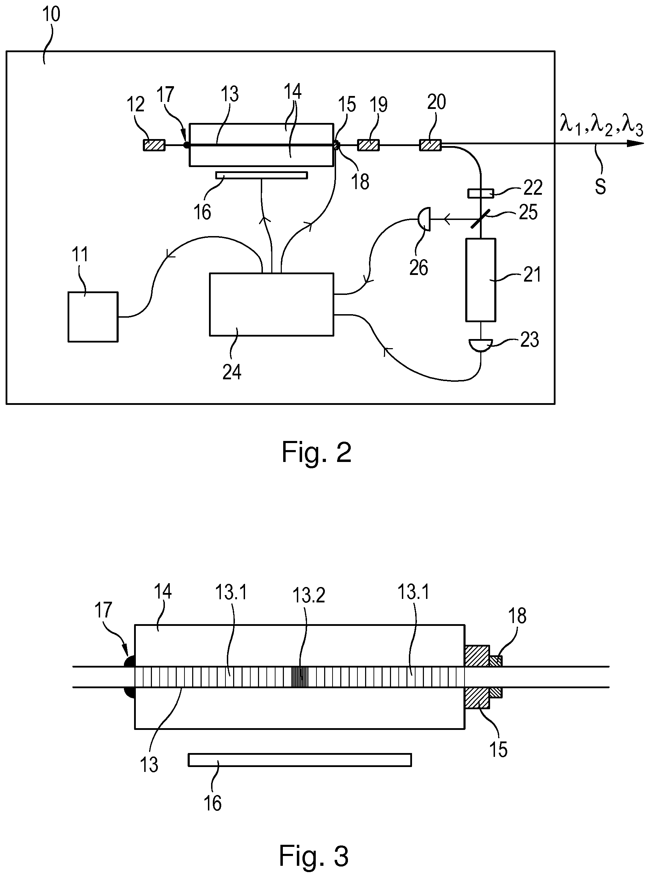

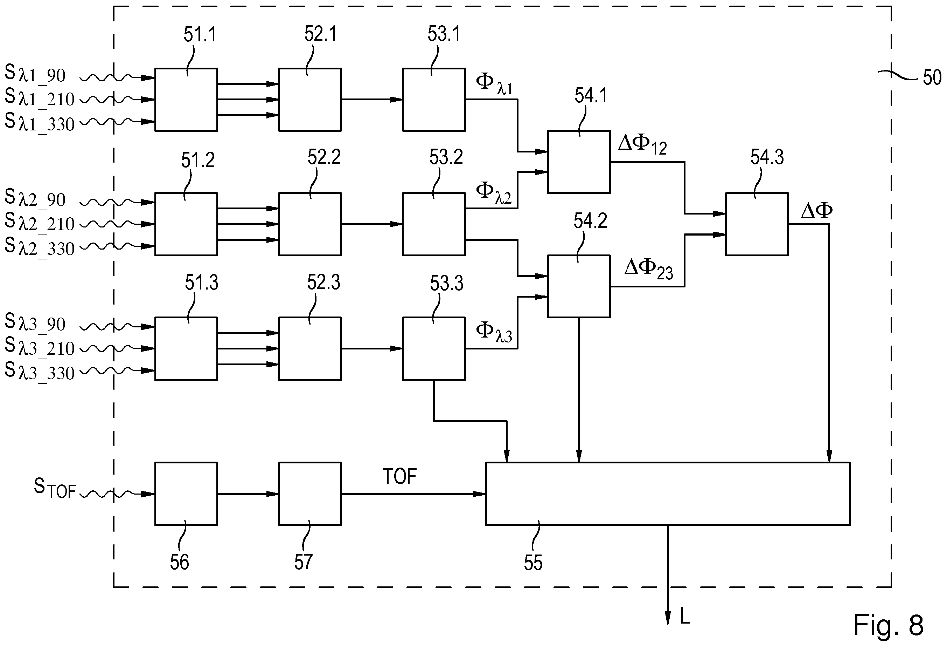

Die in der erfindungsgemäßen Vorrichtung vorgesehene Mehrwellenlängen-Lichtquelle 10 emittiert ein Strahlenbündel S mit mindestens drei unterschiedlichen Wellenlängen $\lambda_1$, $\lambda_2$, $\lambda_3$, die jeweils eine geringe spektrale Linienbreite aufweisen. Die Mehrwellenlängen-Lichtquelle 10 ist hierbei als Faserlaser ausgebildet, der mindestens drei verschiedene Bragg-Gitter umfasst, deren Gitterkonstanten auf die erzeugten Wellenlängen $\lambda_1$, $\lambda_2$, $\lambda_3$ abgestimmt sind. Zu weiteren Details der Mehrwellenlängen-Lichtquelle 10 sei auf die nachfolgende Beschreibung der Figuren 2, 3, 4a - 4d, 5 und 6 verwiesen, hinsichtlich der Wahl geeigneter Wellenlängen $\lambda_1$, $\lambda_2$, $\lambda_3$ auf die Beschreibung der Figur 8.

Das von der Mehrwellenlängen-Lichtquelle 10 gelieferte Strahlenbündel S gelangt in die Interferometer-Einheit 30, wo das Strahlenbündel S mit Hilfe der Strahl-Aufspalteinheit 31, die als polarisierender Strahlteiler ausgeführt ist, in ein Messstrahlenbündel M und ein Referenzstrahlenbündel R aufgespalten wird. Das Messstrahlenbündel M propagiert nach der Aufspaltung in einem Messarm in Richtung eines mindestens entlang der Messrichtung x beweglichen Messreflektors 33 und erfährt dort eine Rückreflexion zurück in Einfallsrichtung. Das Referenzstrahlenbündel R propagiert nach der Aufspaltung in einem Referenzarm in Richtung eines stationären Referenzreflektors 34 und erfährt dort ebenfalls eine Rückreflexion zurück in Einfallsrichtung. Der Messreflektor 33 sowie der Referenzreflektor 34 sind im dargestellten Beispiel als retroreflektierende Tripelspiegel ausgebildet. Die vom Mess- und Referenzreflektor 33, 34 zurückreflektierten Mess- und Referenzstrahlenbündel M, R gelangen dann in die als polarisierender Strahlteiler ausgeführte Strahl-Vereinigungseinheit 31 und überlagern sich dort interferierend in einem Interferenzstrahlenbündel IF. Im dargestellten Ausführungsbeispiel der Figur 1 ist als Strahl-Aufspalteinheit 31 bzw. Strahl-Vereinigungseinheit 31 ein einziges Bauteil in Form eines Strahlteiler-Würfels vorgesehen, in dem beide Einheiten gemeinsam ausgebildet sind. An der Strahlteiler- bzw. Strahlvereinigerfläche 32 des Strahlteilerwürfels erfolgt die Aufspaltung des Strahlenbündels S in Mess- und Referenzstrahlenbündel M, R bzw. die Wiedervereinigung der Mess- und Referenzstrahlenbündel M, R zum Interferenzstrahlenbündel IF. Das Interferenzstrahlenbündel IF durchläuft am Ausgang der Interferometer-Einheit 30 noch eine $\lambda/4$ Platte 35, die den s- und p-polarisierten Anteil des Interferenzstrahlenbündels IF zu einem rotierendem E-Feld-Vektor überlagert, dessen Rotationswinkel zur Auswertung herangezogen wird. Im vorliegenden Ausführungsbeispiel ist die Interferometer-Einheit 30 somit als polarisations-codiertes Interferometer ausgebildet.

Im Hinblick auf die Interferometer-Einheit 30 sei darauf hingewiesen, dass die in Figur 1 skizzierte Ausbildung in Form eines Michelson-Interferometers keinesfalls erfindungswesentlich ist; es können demnach auch alternative Interferometer-Varianten und/oder -Komponenten in der Interferometer-Einheit 30 der erfindungsgemäßen Vorrichtung eingesetzt werden. So wäre es z.B. auch möglich, Kugeln mit einem Brechungsindex n = 2 als Reflektoren einzusetzen, zwischen denen der Absolutabstand gemessen wird. Desweiteren können natürlich auch anderweitig ausgebildete Mess- und Referenzreflektoren eingesetzt werden, beispielsweise Planspiegel etc.. Ebenso könnte ein Mach-Zehnder-Interferometer mit getrennten Strahl-Aufspalt- und Strahl-Vereinigungseinheiten zur Aufspaltung und Vereinigung der Mess- und Referenzstrahlenbündel verwendet werden usw..

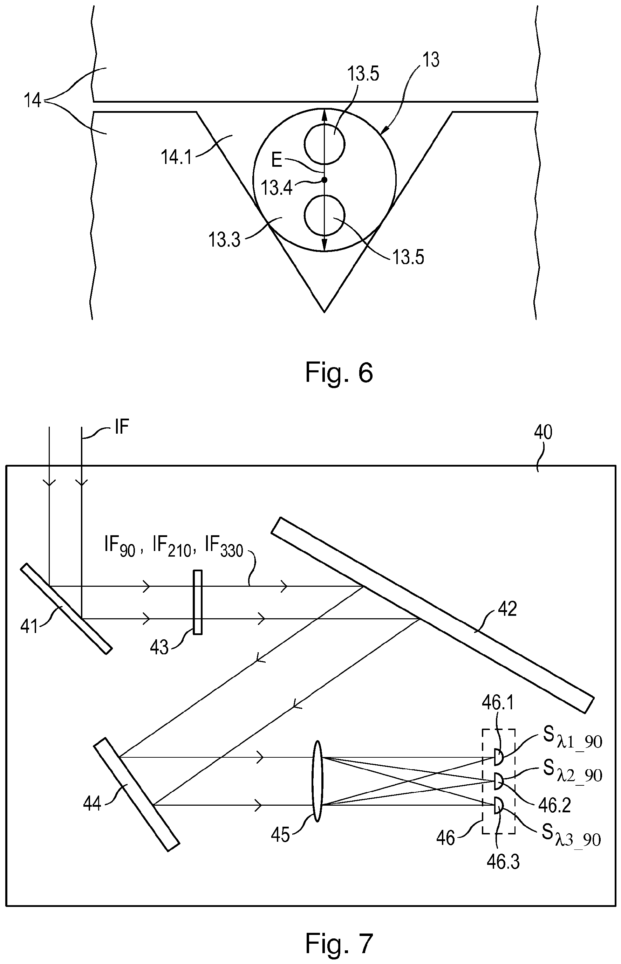

Das mit Hilfe der Interferometer-Einheit 30 erzeugte Interferenzstrahlenbündel IF propagiert dann in Richtung der Detektionseinheit 40. Mit Hilfe der Detektionseinheit 40 erfolgt eine Aufspaltung bzw. Weiterverarbeitung des Interferenzstrahlenbündels IF dergestalt, dass ausgangsseitig pro emittierter Wellenlänge $\lambda_1$, $\lambda_2$, $\lambda_3$ jeweils mehrere elektrische, phasenverschobene Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ resultieren, nämlich pro Wellenlänge je drei um 120° phasenverschobene Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$. Am Ausgang der Detektionseinheit 40 liegen im vorliegenden Beispiel mit drei Wellenlängen $\lambda_1$, $\lambda_2$, $\lambda_3$ dann insgesamt neun Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ vor, die anschließend zur Positionsmessung weiterverarbeitet werden. Im Hinblick auf einen möglichen Aufbau der Detektionseinheit 40 sei auf die nachfolgende Beschreibung der Figur 7 verwiesen.

Die Weiterverarbeitung der Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ erfolgt anschließend in der ebenfalls nur schematisch in Figur 1 angedeuteten Signalverarbeitungs-Einheit 50. Diese ist dazu eingerichtet, aus den Teil-Interferenzsignalen $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ unterschiedlicher Wellenlängen $\lambda_1$, $\lambda_2$, $\lambda_3$ eine absolute Positionsinformation in Form des Abstands L zwischen Messreflektor 33 und der Strahl-Aufspalteinheit 31 zu bestimmen. Dies erfolgt mit Hilfe eines Mehrwellenlängen-Schwebungsverfahrens, wobei in Bezug auf das Auswerteverfahren und die konkrete Ausbildung der Signalverarbeitungs-Einheit 50 auf die weitere Beschreibung der Figur 8 verwiesen sei.

Anhand der Figuren 2, 3, 4a - 4d, 5 und 6 wird nunmehr die in der erfindungsgemäßen Vorrichtung eingesetzte Mehrwellenlängen-Lichtquelle 10 beschrieben.

Wie bereits oben angedeutet, ist die Mehrwellenlängen-Lichtquelle 10 als Faserlaser und zwar in Form eines sog. DFB-Faserlasers (DFB: Distributed Feedback) ausgebildet. Gemäß Figur 2 umfasst der Faserlaser als zentrale Komponente eine laseraktive Faser 13 mit einem geeignet dotierten Faserkern. In die Faser 13 wird über eine Einkoppeloptik 12 an einer Faser-Stirnseite die von einer Pump-Lichtquelle 11 emittierte optische Pumpstrahlung zur Anregung der Laser-Emission eingekoppelt. Als Pump-Lichtquelle 11 kann hierbei etwa ein Halbleiter-Laser in Form eines GaAlAs-Diodenlasers verwendet werden, der Pumpstrahlung mit der Wellenlänge 976nm emittiert.

Die laseraktive Faser 13 ist im vorliegenden Beispiel als Erbium-dotierte Singlemode-Glasfaser ausgebildet, die nach einer geeigneten Anregung Laserstrahlung mit einer definierten Polarisationsrichtung emittiert. Erbium dient demzufolge als laseraktives Medium im vorliegenden Ausführungsbeispiel der Mehrwellenlängen-Lichtquelle 10. Dieses Lasermedium ermöglicht die Erzeugung sehr schmalbandiger Laserstrahlung bei den drei Wellenlängen $\lambda_1$, $\lambda_2$, $\lambda_3$, wodurch eine große Kohärenzlänge im Bereich mehrerer Kilometer sichergestellt werden kann. Die große Kohärenzlänge erweist sich insbesondere bei der Nutzung zur interferometrischen Abstandsmessung als besonders günstig, da darüber das Rauschen der erzeugten Positionsmesswerte minimierbar ist. Weitere Vorteile der als Faserlaser ausgebildeten Mehrwellenlängen-Lichtquelle 10 sind dessen einfache Herstellbarkeit und Robustheit.

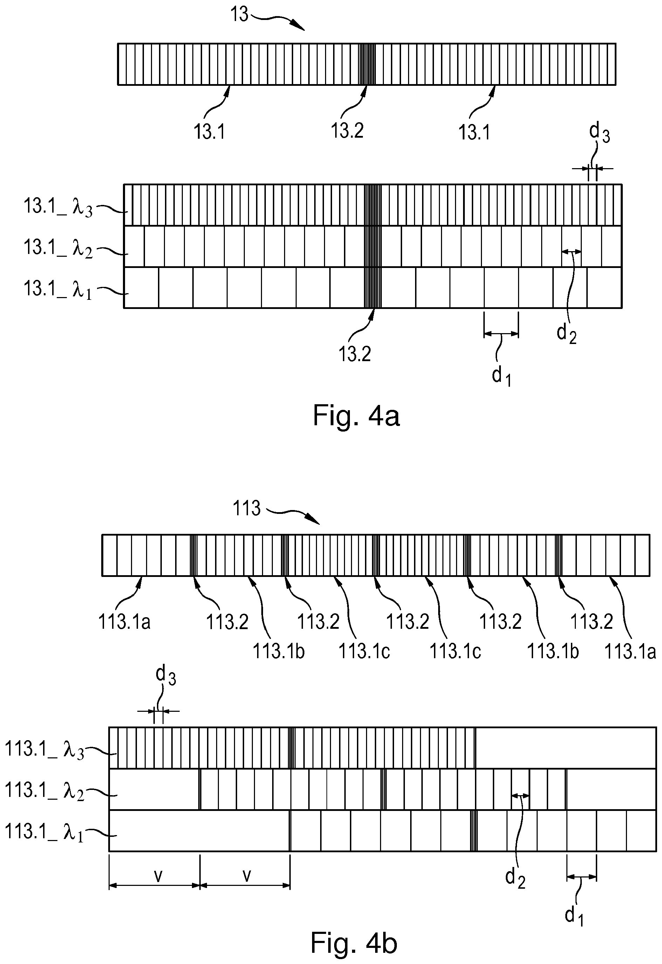

In die laseraktive Faser 13 bzw. in den Erbium-dotierten Faserkern sind mindestens drei Bragg-Gitter integriert bzw. eingeschrieben, die für die jeweiligen Wellenlängen jeweils zur Ausbildung des zum Laserbetrieb erforderlichen Laser-Resonators dienen. Mit den Bezugszeichen 13.1 ist in der Darstellung der Figur 3 das aus der überlagerten Anordnung der einzelnen Bragg-Gitter resultierende Gitter bezeichnet. Die in Figur 2 und 3 nicht im einzelnen darstellbaren Bragg-Gitter in der Faser 13 bzw. im Faserkern sind jeweils als binäre Brechungsindex-Gitter ausgebildet. Dies bedeutet, dass jedes Bragg-Gitter aus einer entlang der Fasererstreckungsrichtung periodischen Aneinanderreihung von Gitterbereichen mit unterschiedlichen Brechungsindizes besteht. In Bezug auf die Relativ-Anordnung der mindestens drei Bragg-Gitter in der Faser 13 existieren grundsätzlich verschiedene Möglichkeiten, wie im Folgenden anhand der Figuren 4a - 4d noch erläutert wird. Im Beispiel der Figur 3 sind die drei vorgesehenen Bragg-Gitter mit identischen Gitterlängen vollständig überlappend entlang der Erstreckungsrichtung der Faser 13 angeordnet.

Die Gitterkonstanten $d_1$, $d_2$, $d_3$ der drei Bragg-Gitter sind auf die zu erzeugenden drei Wellenlängen $\lambda_1$, $\lambda_2$, $\lambda_3$ im Strahlenbündel S abgestimmt, d.h. die drei Bragg-Gitter besitzen unterschiedliche Gitterkonstanten $d_1$, $d_2$, $d_3$. Zur Wahl geeignet aufeinander abgestimmter Wellenlängen $\lambda_1$, $\lambda_2$, $\lambda_3$ sei ergänzend zu den folgenden Ausführungen auch auf die Beschreibung der Figur 8 verwiesen. Um den gewünschten, möglichst schmalbandigen einmodigen Laserbetrieb bei den drei Wellenlängen $\lambda_1$, $\lambda_2$, $\lambda_3$ zu gewährleisten, besitzt jedes der drei Bragg-Gitter desweiteren einen Phasensprung 13.2 der Größe $\pi$, der vorzugsweise zentral bzw. mittig im Bragg-Gitter vorgesehen ist. Ein Phasensprung 13.2 der Größe $\pi$ bedeutet, dass die beiden Bragg-Teilgitter auf beiden Seiten des Phasensprungs 13.2 zueinander um eine halbe Gitterperiode verschoben sind. Aufgrund der im Beispiel der Figur 3 vorgesehenen vollständig überlappenden Anordnung der drei Bragg-Gitter entlang der Fasererstreckungsrichtung liegen die Phasensprünge aller Bragg-Gitter an der gleichen Stelle der laseraktiven Faser 13 und werden in der Figur mit dem Bezugszeichen 13.2 bezeichnet.

In einem möglichen Ausführungsbeispiel werden die drei Wellenlängen $\lambda_1$, $\lambda_2$, $\lambda_3$ konkret folgendermaßen gewählt:

$\lambda_1$ = 1560nm, $\lambda_2$ = 1547,11nm, $\lambda_3$ = 1534,32nm

Der Zusammenhang zwischen den Gitterkonstanten $d_i$ (i = 1...3) der drei Bragg-Gitter und der jeweils zugehörigen Wellenlänge $\lambda_i$ (i = 1...3) ergibt sich hierbei gemäß

$$\lambda_i = 2 \cdot n_i \cdot d_i \qquad \text{(Gl. 1)}$$

mit

$\lambda_i$ := emittierte Wellenlänge
$n_i$ := Brechungsindex der laseraktiven Faser bei der Wellenlänge $\lambda_i$
$d_i$ := Gitterkonstante des Bragg-Gitters
i := 1, 2, 3

Mit einem Brechungsindex $n_1 = n_2 = n_3 = 1{,}45$ der laseraktiven Erbium-dotierten Faser 13 resultieren damit für die vorstehend beispielhaft angegebenen Wellenlängen $\lambda_1$ = 1560nm, $\lambda_2$ = 1547,11nm, A3 = 1534,32nm die folgenden Gitterkonstanten der zugehörigen Bragg-Gitter:

$d_1$ = 537,93nm, $d_2$ = 533,49nm, $d_3$ = 529,07nm

Wie aus den Figuren 2, 3 sowie 6 ersichtlich, wird die laseraktive Faser 13 in einer vorliegend zweiteiligen Faserhalterung 14 mechanisch gehaltert. Gemäß der Schnittansicht in Figur 6 besitzt der untere Teil der Faserhalterung 14 eine nutförmige bzw. V-förmige Ausnehmung 14.1, in der die Faser 13 gelagert wird. Der obere Teil der Faserhalterung 14 ist plattenförmig ausgebildet und deckt die Ausnehmung 14.1 ab.

Mit den Bezugszeichen 17, 18 sind in den Figuren 2 und 3 jeweils Fixierungspunkte bezeichnet, zwischen denen die laseraktive Faser 13 in der Faserhalterung 14 unter Zug angeordnet ist. Derjenige Bereich der Faser 13, in dem die drei Bragg-Gitter angeordnet bzw. eingeschrieben sind, d.h. der laseraktive Bereich der Faser 13, ist dabei zwischen den Fixierungspunkten 17, 18 vorgesehen. Im Bereich zwischen den Fixierungspunkten 17, 18 erweist sich desweiteren als vorteilhaft, wenn die Faser 13 möglichst schwingungsgedämpft in der Faserhalterung 14 angeordnet ist. Dies erfolgt im dargestellten Ausführungsbeispiel derart, dass in der Ausnehmung 14.1 der Faserhalterung 14 zusätzlich, nicht in der Figur gezeigte, Dämpfungsmittel, wie etwa zähflüssige Öle, Silikone oder Klebstoffe angeordnet werden. Die Fixierungspunkte 17, 18 können in Form einer geeigneten mechanischen Klemmung der Faser 13 in der Faserhalterung 14 ausgebildet sein; alternativ kann die Fixierung der Faser 13 aber auch über ein Verkleben der Faser 13 an den Fixierungspunkten 17, 18 erfolgen.

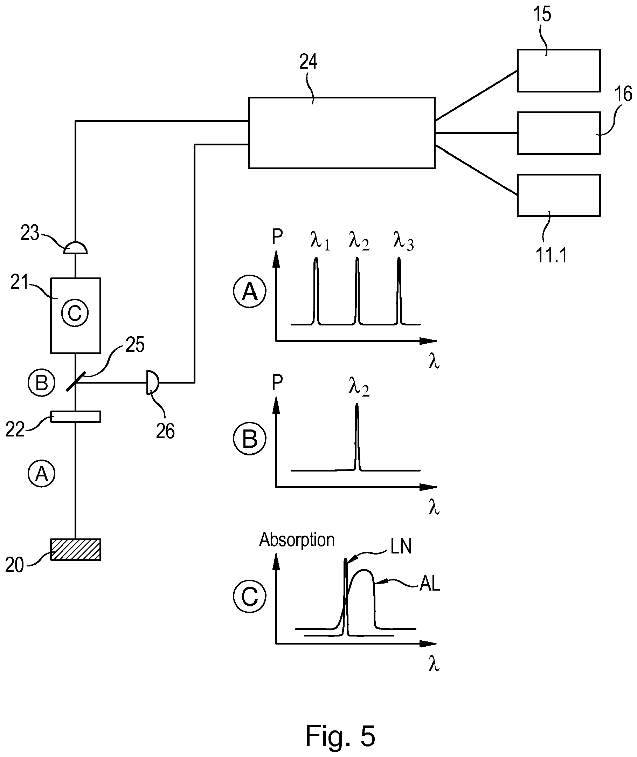

Desweiteren ist eine jeweils schematisch angedeutete Piezo-Aktuator-Einheit 15 sowie eine Temperierungs-Einheit 16 benachbart zum laseraktiven Bereich der Faser 13 in den Figuren 2 und 3 dargestellt. Diese Komponenten dienen - wie nachfolgend noch erläutert wird - u.a. als Stellelemente, auf die eine Regelungseinheit 24 zur Erzeugung von Laserstrahlung mit definierten Wellenlängen $\lambda_1$, $\lambda_2$, $\lambda_3$ einwirkt. Zu diesem Zweck wird ein Teil des von der laseraktiven Faser 13 emittierten Strahlenbündels S, das vorher noch einen Pumplicht-Filter 19 zum Herausfiltern der Pumpwellenlänge durchlaufen hat, mit Hilfe eines Auskoppelelements 20 über einen Filter 22 und einer Absorptionszelle 21 einem Photodetektor 23 zugeführt; dessen Ausgangssignale werden der Regelungseinheit 24 zugeführt. Über den Pumplicht-Filter 19, beispielsweise ausgebildet als WDM-Koppler, wird der eventuell noch im Strahlenbündel S enthaltene Pumplichtanteil herausgefiltert, damit dieser nicht in den nachfolgenden Signalpfad gelangt und dort etwa die optischen Bauteile beschädigt. Zum Einwirken auf die laseraktive Faser 13 kann über die Regelungseinheit 24 dann mit Hilfe der Piezo-Aktuator-Einheit 15 der mechanische Zug auf den laseraktiven Bereich der in der Faserhalterung 14 eingeklemmte Faser 13 definiert verändert werden. Desweiteren ist es über die Temperierungs-Einheit 16 möglich, die Temperatur des laseraktiven Bereichs der Faser 13 definiert zu verändern. Ferner besteht noch die Möglichkeit, über die Regelungseinheit 24 auf den Pumpstrom der Pump-Lichtquelle 11 in definierter Art und Weise einzuwirken, um die exakte Frequenz der gewünschten Wellenlängen $\lambda_1$, $\lambda_2$, $\lambda_3$ sicherzustellen. Zur näheren Erläuterung der Arbeitsweise der Regelungseinheit 24 sei auf die nachfolgende Beschreibung der Figur 5 verwiesen.

Wie vorstehend erwähnt, sind in die laseraktive Faser 13 bzw. in dessen Faserkern im vorliegenden Beispiel drei Bragg-Gitter integriert bzw. eingeschrieben, deren jeweilige Ausbildung auf die zu erzeugenden drei Wellenlängen $\lambda_1$, $\lambda_2$, $\lambda_3$ abgestimmt ist; konkret werden hierbei die Gitterkonstanten $d_1$, $d_2$, $d_3$ der drei Bragg-Gitter geeignet gewählt. Pro vorgesehenem Bragg-Gitter ist ferner - wie ebenfalls oben erwähnt - ein Phasensprung der Größe $\pi$ vorzusehen, vorzugsweise zentral bzw. mittig im Bragg-Gitter angeordnet.

Im Hinblick auf die Anordnung der im vorliegenden Ausführungsbeispiel vorgesehenen drei Bragg-Gitter in der laseraktiven Faser gibt es grundsätzlich mehrere Möglichkeiten. Entsprechende Varianten werden nachfolgend anhand der schematischen Darstellungen der Figuren 4a - 4d erläutert. Im oberen Teil der einzelnen Figuren ist jeweils schematisiert die Faser mit dem aus der Überlagerung der einzelnen Bragg-Gitter resultierenden Gitter gezeigt, das je nach Überlagerungsvariante unterschiedliche Gitterabschnitte aufweist. Im unteren Teil der Figuren ist jeweils in schematischer Form angedeutet, wie die verschiedenen Gitterabschnitte im resultierenden Gitter in der Faser sich aus der jeweiligen Relativanordnung bzw. Überlagerung mehrerer einzelner Bragg-Gitter ergeben.

Eine erste Variante zur möglichen Anordnung der drei Bragg-Gitter in der laseraktiven Faser ist in Figur 4a gezeigt; diese Anordnungsvariante entspricht derjenigen aus dem Ausführungsbeispiel der Figur 3. Mit dem Bezugszeichen 13.1 wird im oberen Teil der Figur 4a das aus der vollständig überlappenden Anordnung der drei einzelnen Bragg-Gitter resultierende Gitter bezeichnet, das hier einen einzigen zentralen Phasensprung 13.2 der Größe $\pi$ besitzt. Im unteren Teil der Figur 4a sind stark schematisiert die einzelnen drei Bragg-Gitter 13.1_$\lambda_1$, 13.1_$\lambda_2$, 13.1_$\lambda_3$ gezeigt, wie sie in dieser Variante relativ zueinander in der Faser 13 angeordnet sind. Selbstverständlich sind sowohl die Gitterkonstanten $d_1$, $d_2$, $d_3$ der drei Bragg-Gitter 13.1_$\lambda_1$, 13.1_$\lambda_2$, 13.1_$\lambda_3$ als auch das aus der Überlagerung resultierende Gitter 13.1 in der Faser 13 nicht maßstäblich korrekt dargestellt. Es soll lediglich prinzipiell zum Ausdruck kommen, dass die drei Bragg-Gitter 13.1_$\lambda_1$, 13.1_$\lambda_2$, 13.1_$\lambda_3$ wie oben erläutert unterschiedliche Gitterkonstanten $d_1$, $d_2$, $d_3$ besitzen, abhängig von den zu erzeugenden Wellenlängen $\lambda_1$, $\lambda_2$, $\lambda_3$.

In der dargestellten Variante gemäß Figur 4a ist hierbei vorgesehen, dass die drei Bragg-Gitter 13.1_$\lambda_1$, 13.1_$\lambda_2$, 13.1_$\lambda_3$ entlang der Fasererstreckungsrichtung vollständig überlappend in der laseraktiven Faser 13 angeordnet sind. Die Phasensprünge der einzelnen Bragg-Gitter 13.1_$\lambda_1$, 13.1_$\lambda_2$, 13.1_$\lambda_3$ fallen damit zusammen und das aus der Überlagerung resultierende Gitter in der Faser 13 besitzt einen zentralen Phasensprung 13.2. Im aus der Überlagerung der drei Bragg-Gitter 13.1_$\lambda_1$, 13.1_$\lambda_2$, 13.1_$\lambda_3$ resultierenden Gitter 13.1 liegen hier ferner über die komplette Länge die Gitterkonstanten bzw. Gitterfrequenzen der einzelnen Bragg-Gitter 13.1_$\lambda_1$, 13.1_$\lambda_2$, 13.1_$\lambda_3$ vor. Derartige überlappende Bragg-Gitter-Anordnungen können beispielsweise durch die additive Überlagerung der Brechungsindex-Modulationen der einzelnen Bragg-Gitter 13.1_$\lambda_1$, 13.1_$\lambda_2$, 13.1_$\lambda_3$ erzeugt werden.

In den nachfolgend anhand der Figuren 4b — 4d zu erläuternden Varianten zur Anordnung der drei Bragg-Gitter in der laseraktiven Faser ist im Unterschied zur Variante aus Figur 4a jeweils vorgesehen, dass die drei Bragg-Gitter entlang der Fasererstreckungsrichtung um bestimmte Versatzabstände V zueinander verschoben angeordnet sind. In den verschiedenen Varianten unterscheiden sich jeweils die Versatzabstände V. Die Phasensprünge der einzelnen Bragg-Gitter sind in diesen Varianten dann im Unterschied zur Figur 4a entlang der Fasererstreckungsrichtung ebenfalls um die entsprechenden Versatzabstände V zueinander verschoben.

Bei der in Figur 4b dargestellten zweiten Variante zur möglichen Anordnung der drei Bragg-Gitter 113.1_$\lambda_1$, 113.1_$\lambda_2$, 113.1_$\lambda_3$ in der laseraktiven Faser 113 ist konkret vorgesehen, einen Versatzabstand V zwischen 0% und 50% der Gitterlänge eines Bragg-Gitters 113.1_$\lambda_i$ zwischen benachbarten Bragg-Gittern 113.1_$\lambda_1$, 113.1_$\lambda_2$, 113.1_$\lambda_3$ einzustellen. Hierbei besitzen die drei verschiedenen Bragg-Gitter 113.1_$\lambda_1$, 113.1_$\lambda_2$, 113.1_$\lambda_3$ jeweils die gleiche effektive Gitterlänge entlang der Fasererstreckungsrichtung. Unter der effektiven Gitterlänge sei dabei die für die jeweilige Wellenlänge wirksame Länge der Bragg-Gitter 113.1_$\lambda_i$ entlang der Gitterlängsrichtung verstanden. Die effektive Gitterlänge entspricht hierbei nicht der mechanischen Länge der Bragg-Gitter 113.1_$\lambda_i$, sondern ergibt sich aus der Multiplikation der mechanischen Länge mit einem Skalierungsfaktor und dem Brechungsindexhub des Gitters.

Im Beispiel der Figur 4b ist das Bragg-Gitter 113.1_$\lambda_2$ gegenüber dem Bragg-Gitter 113.1_$\lambda_3$ um einen Versatzabstand V von etwa 25% der effektiven Gitterlänge der Bragg-Gitter 113.1_$\lambda_i$ nach rechts verschoben in der Faser 113 angeordnet; das Bragg-Gitter 113.1_$\lambda_1$ ist gegenüber dem Bragg-Gitter 113.1_$\lambda_2$ ebenfalls um ca. 25% der effektiven Gitterlänge des Bragg-Gitters 13.1_$\lambda_i$ nach rechts verschoben in der Faser 113 angeordnet.

Im aus der Überlagerung resultierenden Gitter in der Faser 113 ergeben sich damit unterschiedliche erste, zweite und dritte Gitterabschnitte 113.1a, 113.1b, 113.1c, wie dies im oberen Teil der Figur 4b veranschaulicht ist. Dabei weisen aufgrund der vorgesehenen Relativanordnung der einzelnen Bragg-Gitter 113.1_$\lambda_1$, 113.1_$\lambda_2$, 113.1_$\lambda_3$ die ersten Gitterabschnitte 113.1a Bragg-Gitter 113.1_$\lambda_1$, 113.1_$\lambda_2$, 113.1_$\lambda_3$ mit nur einer Gitterkonstanten auf. Die zweiten Gitterabschnitte 113.1b resultieren aus der überlappenden Anordnung von zwei Bragg-Gittern 113.1_$\lambda_1$, 113.1_$\lambda_2$, 113.1_$\lambda_3$ mit jeweils zwei verschiedenen Gitterkonstanten. Die dritten Gitterabschnitte 113.1c schließlich resultieren aus der überlappenden Anordnung von drei Bragg-Gittern 113.1_$\lambda_1$, 113.1_$\lambda_2$, 113.1_$\lambda_3$ mit jeweils drei verschiedenen Gitterkonstanten.

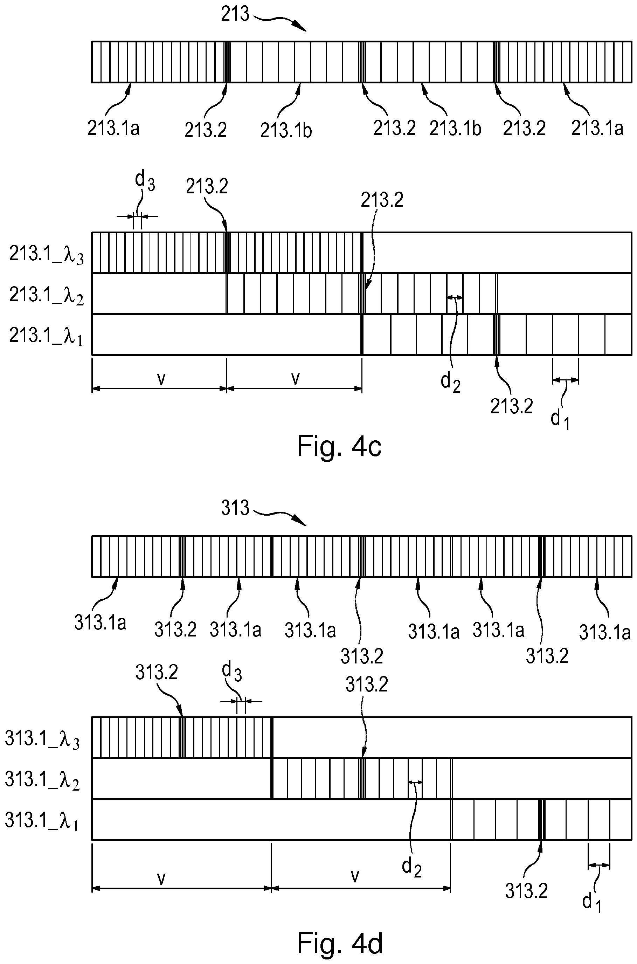

Eine weitere Variante zur möglichen Anordnung der drei Bragg-Gitter 213.1_$\lambda_1$, 213.1_$\lambda_2$, 213.1_$\lambda_3$ in der laseraktiven Faser 213 ist in Figur 4c analog zu den vorhergehenden Varianten dargestellt. Konkret ist hier ein Versatzabstand V zwischen 50% und 100% der effektiven Gitterlänge der Bragg-Gitter 213.1_$\lambda_i$ zwischen benachbarten Bragg-Gittern 213.1_$\lambda_1$, 213.1_$\lambda_2$, 213.1_$\lambda_3$ vorgesehen. So ist etwa das Bragg-Gitter 213.1_$\lambda_2$ gegenüber dem Bragg-Gitter 113.1_$\lambda_3$ um 50% der effektiven Gitterlänge eines Bragg-Gitters 213.1_$\lambda_i$ nach rechts verschoben in der Faser 213 angeordnet; das Bragg-Gitter 213.1_$\lambda_1$ ist gegenüber dem Bragg-Gitter 213.1_$\lambda_2$ ebenfalls um einen Versatzabstand V von ca. 50% der effektiven Gitterlänge eines Bragg-Gitters 213.1_$\lambda_i$ nach rechts verschoben in der Faser 213 angeordnet. Im aus der Überlagerung resultierenden Gitter in der Faser 213 ergeben sich damit unterschiedliche erste und zweite Gitterabschnitte 213.1a, 213.1b wie dies im oberen Teil der Figur 4b veranschaulicht ist. Dabei weisen aufgrund der vorgesehenen Relativanordnung der einzelnen Bragg-Gitter 213.1_$\lambda_1$, 213.1_$\lambda_2$, 213.1_$\lambda_3$ die ersten Gitterabschnitte 213.1a Bragg-Gitter 213.1_$\lambda_1$, 213.1_$\lambda_2$, 213.1_$\lambda_3$ mit jeweils nur einer Gitterkonstanten auf. Die zweiten Gitterabschnitte 213.1b resultieren aus der überlappenden Anordnung von zwei Bragg-Gittern 213.1_$\lambda_1$, 213.1_$\lambda_2$, 213.1_$\lambda_3$ mit jeweils zwei verschiedenen Gitterkonstanten.

Eine vierte Variante zur möglichen Anordnung der drei Bragg-Gitter 313.1_$\lambda_1$, 313.1_$\lambda_2$, 313.1_$\lambda_3$ in der laseraktiven Faser 313 ist in Figur 4d wiederum analog zu den vorhergehenden Varianten dargestellt. Hier ist nunmehr ein Versatzabstand V von 100% der effektiven Gitterlänge eines Bragg-Gitters 213.1_$\lambda_i$ zwischen benachbarten Bragg-Gittern 313.1_$\lambda_1$, 313.1_$\lambda_2$, 313.1_$\lambda_3$ einzustellen. So ist etwa das Bragg-Gitter 313.1_$\lambda_2$ gegenüber dem Bragg-Gitter 313.1_$\lambda_3$ um einen Versatzabstand V von 100% der effektiven Gitterlänge eines Bragg-Gitters 313.1_$\lambda_i$ nach rechts verschoben in der Faser 313 angeordnet; das Bragg-Gitter 313.1_$\lambda_1$ ist gegenüber dem Bragg-Gitter 313.1_$\lambda_2$ ebenfalls um 100% der effektiven Gitterlänge eines Bragg-Gitters 313.1_$\lambda_i$ nach rechts verschoben in der Faser 313 angeordnet. Im aus der Überlagerung resultierenden Gitter in der Faser 313 ergeben sich damit ausschließlich Gitterabschnitte 313.1a, wie dies im oberen Teil der Figur 4b veranschaulicht ist. Dabei weisen aufgrund der vorgesehenen Relativanordnung der einzelnen Bragg-Gitter 313.1_$\lambda_1$, 313.1_$\lambda_2$, 313.1_$\lambda_3$ sämtliche Gitterabschnitte 313.1a Bragg-Gitter mit jeweils nur einer Gitterkonstanten auf.

Im Hinblick auf die Anordnung der laseraktiven Faser 13 in der Faserhalterung 14 ist in jeder der vorstehend erläuterten Varianten sicherzustellen, dass derjenige Bereich der Faser 13 zwischen den Fixierungspunkten 17, 18 angeordnet wird, in dem sich sämtliche Bragg-Gitter befinden.

Anhand der schematisierten Darstellung in Figur 5 wird nachfolgend eine geeignete Regelung für die Mehrwellenlängen-Lichtquelle 10 der erfindungsgemäßen Vorrichtung erläutert, mit der ausgangsseitig die gewünschten drei Wellenlängen $\lambda_1$, $\lambda_2$, $\lambda_3$ bereitgestellt werden können.

Dargestellt ist hierbei in vergrößerter Form ein Teil der bereits in Figur 2 gezeigten Mehrwellenlängen-Lichtquelle 10, nämlich die Signalverarbeitung zwischen dem Auskoppelelement 20 und den verschiedenen Stellelementen in Form der Stromquelle 11.1 der Pumplichtquelle, der Piezo-Aktuator-Einheit 15 und der Temperierungs-Einheit 16.

Wie bereits oben erwähnt, wird über das Auskoppelelement 20, z.B. ausgebildet als Fasersplitter mit einem Auskoppelverhältnis von 99:1 oder 90:10, ein Teil des von der laseraktiven Faser emittierten Strahlenbündels ausgekoppelt. Nach der Auskopplung liegen im Strahlbereich A wie in Figur 5 angedeutet zunächst die drei erzeugten Ist-Wellenlängen $\lambda_1$, $\lambda_2$, $\lambda_3$ vor. Der ausgekoppelte Strahlanteil wird dann einem Filter 22 zugeführt, der beispielsweise als Interferenzfilter ausgebildet und nur für die Soll-Wellenlänge $\lambda_2$ durchlässig ist. Nach dem Passieren des Filters 22 liegt somit im Strahlbereich B nur noch die Ist-Wellenlänge $\lambda_2$ aus dem emittierten Strahlenbündel S vor, die anschließend einer Absorptionszelle 21 zugeführt wird. Die Absorptionszelle 21 ist als Acetylen- oder HCN-Zelle ausgebildet und besitzt eine im Detail C in Figur 5 angedeutete Absorptionslinie AL.

Im Fall einer Variation der Wellenlänge $\lambda_2$ wird quasi mit einer schmalen Lasernadel LN die Form der Absorptionslinie AL abgefahren. Trägt man das resultierende Signal am nachgeordneten Photodetektor 23 gegen die Wellenlänge auf, so misst man die Form der Absorptionslinie. Setzt man sich nun auf die Mitte einer Flanke der Absorptionslinie, so führt eine Wellenlängenänderung zu einem Anstieg bzw. einem Abfall des Ausgangssignals der Absorptionszelle 21 am nachgeordneten Photodetektor 23.

Die die Absorptionszelle 21 passierende Strahlung stellt somit ein Maß für die Differenz zwischen der Ist-Wellenlänge $\lambda_2$ und der erforderlichen Soll-Wellenlänge $\lambda_2$ dar. Das entsprechende optische Regelsignal wird anschließend einem Photodetektor 23 zugeführt, der das optische Regelsignal in ein elektrisches Regelsignal in Form eines Stromsignals wandelt, das anschließend der Regelungseinheit 24 zugeführt wird. Desweiteren wird der Regelungseinheit 24 ein Referenzsignal zugeführt welches über ein Photoelement 26 generiert wird, auf das Strahlung gelangt, die mit Hilfe eines Auskoppelements 25 aus dem Strahlbereich B ausgekoppelt wird. Auf diese Art und Weise können Schwankungen der Lichtintensität in der Regelungseinheit 24 korrigiert werden.

Die Regelungseinheit 24 umfasst beispielsweise einen PID-Regler und erzeugt ausgangsseitig die erforderliche Stellgröße, um auf eines oder mehrere der vorgesehenen Stellelemente definiert einzuwirken und derart die Soll-Wellenlängen $\lambda_1$, $\lambda_2$, $\lambda_3$ einzustellen. Als Stellelemente, auf die die Regelungseinheit 24 einwirkt, sind wie bereits oben erwähnt die Stromquelle 11.1 für die Pumplichtquelle, die Piezo-Aktuator-Einheit 15 sowie die Temperierungseinheit 16 in der Mehrwellenlängen-Lichtquelle vorgesehen. Über die definierte Einwirkung auf jedes dieser Stellelemente können gleichzeitig sämtliche Wellenlängen $\lambda_1$, $\lambda_2$, $\lambda_3$ der vom Faserlaser emittierten Laserstrahlung gezielt verändert werden. Beispielsweise bewirkt eine 1%ige Dehnung der Faser mit Hilfe der Piezo-Aktuator-Einheit 15 eine Veränderung aller drei Wellenlängen $\lambda_1$, $\lambda_2$, $\lambda_3$ um jeweils 1% usw..

Die unterschiedlichen Stellelemente werden dabei genutzt, um unterschiedliche Zeitkonstanten auszuregeln. So werden etwa sehr schnelle Wellenlängenschwankungen im Bereich von mehr als 10kHz mit Hilfe der Stromquelle 11.1 für die Pumplichtquelle ausgeregelt. Zum Ausregeln von Wellenlängenschwankungen im Bereich zwischen 1Hz und 10kHz wird die Piezo-Aktuator-Einheit 15 genutzt, zum Ausregeln sehr langsamer Wellenlängenschwankungen die Temperierungseinheit 16.

Auf die vorstehend skizzierte Art und Weise kann somit eine Regelung der Mehrwellenlängen-Lichtquelle auf die gewünschte Soll-Wellenlänge $\lambda_2$ erfolgen. Dabei ist aufgrund der oben erläuterten Ausbildung der laseraktiven Faser und der gleichzeitigen Einwirkung der Stellelemente auf alle Bragg-Gitter gleichzeitig sichergestellt, dass auch auf die weiteren erforderlichen Wellenlängen $\lambda_1$, $\lambda_3$ geregelt werden kann. Es ist damit ein definiertes Einregeln aller drei Wellenlängen $\lambda_1$, $\lambda_2$, $\lambda_3$ möglich, wobei als Eingangssignal der Regelungseinheit 24 ein elektrisches Signal fungiert, das aus einem optischen Signal von lediglich einer der drei Wellenlängen $\lambda_1$, $\lambda_2$, $\lambda_3$ abgeleitet wird. Gegenüber einer Lichtquelle mit drei einzelnen Lasern und den dabei erforderlichen drei Regelungseinheiten resultiert somit eine deutlich vereinfachte Regelung der Mehrwellenlängen-Lichtquelle in der erfindungsgemäßen Vorrichtung.

Im Zusammenhang mit der Beschreibung der Mehrwellenlängen-Lichtquelle der erfindungsgemäßen Vorrichtung sei abschließend auf die Figur 6 verwiesen, die eine Schnittansicht der laseraktiven Faser 13 in der zweiteiligen Faserhalterung 14 zeigt. Erkennbar sind in dieser Darstellung der Fasermantel 13.3 und der Faserkern 13.4 der laseraktiven Faser sowie Stresselemente 13.5. Über die Stresselemente 13.5, die beim Herstellungsprozess in die Faser 13 eingeschmolzen werden, ist gewährleistet, dass die Faser 13 für das transmittierte Licht polarisationserhaltend wirkt.

Mit dem Bezugszeichen E ist in Figur 6 ferner die Polarisationsachse der von der Faser 13 emittierten Laserstrahlung bezeichnet; wie bereits oben erwähnt, emittiert die Mehrwellenlängen-Lichtquelle 10 Laserstrahlung mit einer definierten Polarisation. Im vorliegenden Beispiel wird die sogenannte langsame Polarisationsachse E verwendet.

Im folgenden wird nunmehr anhand von Figur 7 der Aufbau einer Detektionseinheit 40 erläutert, die in der erfindungsgemäßen Vorrichtung eingesetzt werden kann.

Wie in der Figur gezeigt, trifft das über die Interferometer-Einheit erzeugte Interferenzstrahlenbündel IF, welches nach dem Durchlaufen der $\lambda/4$ Platte 35 aus einem rotierenden, linear polarisiertem E-Feld besteht, auf die Detektionseinheit 40. Dort erfolgt über ein erstes Aufspaltelement 41 und ein nachgeordnetes Polarisationselement 43 eine Aufspaltung des Interferenzstrahlenbündels IF in drei zueinander phasenverschobene Interferenzstrahlenbündel $IF_{90}$, $IF_{210}$, $IF_{330}$. Hierbei ist das erste Aufspaltelement 41 als Reflexionsphasengitter ausgebildet, welches das darauf einfallende Interferenzstrahlenbündel IF zunächst in drei räumlich getrennte Interferenzstrahlenbündel aufspaltet. Das Polarisationselement 43 umfasst drei lineare Polarisationsfilter mit um jeweils 60° gegeneinander verdrehten Polarisationsrichtungen und bewirkt, dass die drei vom Aufspaltelement 41 getrennten Interferenzstrahlenbündel in drei um jeweils 120° phasenverschobene Interferenzstrahlenbündel $IF_{90}$, $IF_{210}$, $IF_{330}$ umgewandelt werden. Die Aufspaltung in die drei phasenverschobenen Interferenzstrahlenbündel $IF_{90}$, $IF_{210}$, $IF_{330}$ über das erste Aufspaltelement 41 und das Polarisationselement 42 erfolgt senkrecht zur Zeichenebene, d.h. in der Darstellung der Figur 7 sind die nach dem Polarisationselement 43 vorliegenden, drei aufgespaltenen Interferenzstrahlenbündel $IF_{90}$, $IF_{210}$, $IF_{330}$ nicht einzeln erkennbar. Die drei Interferenzstrahlenbündel $IF_{90}$, $IF_{210}$, $IF_{330}$ treffen dann auf ein zweites Aufspaltelement 42, welches ebenfalls in Form eines Reflexionsphasengitters ausgebildet ist. Über das zweite Aufspaltelement 42 resultiert eine wellenlängenabhängige Aufspaltung der drei phasenverschobenen Interferenzstrahlenbündel $IF_{90}$, $IF_{210}$, $IF_{330}$, so dass anschließend pro Wellenlänge $\lambda_1$, $\lambda_2$, $\lambda_3$ jeweils drei phasenverschobene Teil-Interferenzstrahlenbündel vorliegen, also insgesamt neun Teil-Interferenzstrahlenbündel, die in Figur 7 nicht einzeln dargestellt sind. Die Teil-Interferenzstrahlenbündel gelangen über ein Umlenkelement 44 und eine Abbildungsoptik 45 dann auf ein Detektorarray 46, das vorliegend neun elektrooptische Detektorelemente 46.1 - 46.3 umfasst, wobei in der Darstellung der Figur 7 lediglich ein Teil derselben erkennbar ist. Die Abbildungsoptik 45 ist hierbei als einzelne Linse oder als Linsenarray ausgebildet und kann alternativ auch kombiniert mit dem Umlenkelement 44 in einem einzigen Bauteil ausgebildet sein. Mit Hilfe des Detektorarrays 46 bzw. dessen Detektorelementen 46.1 - 46.9 werden die neun Teil-Interferenzstrahlenbündel erfasst und in neun elektrische Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ umgewandelt, die dann in der Signalverarbeitungseinheit weiterverarbeitet werden. In Figur 7 sind dabei von den insgesamt neun erzeugten Teil-Interferenzsignalen $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ lediglich die drei Teil-Interferenzsignale $3_{\lambda1\_90}$, $S_{\lambda2\_90}$, $S_{\lambda3\_90}$ dargestellt.

Die Detektionseinheit 40 kann alternativ zur Variante gemäß Figur 7 auch besonders kompakt in Form eines einzigen monolithischen Bauteils aus Glas ausgebildet werden. In dieses Bauteil sind die verschiedenen optisch relevanten Komponenten wie insbesondere die beiden Aufspaltelemente, das Polarisationselement, die Abbildungsoptik sowie ggf. erforderliche Umlenkelemente integriert.

Desweiteren wäre es möglich, dass die Detektionseinheit 40 nur ein einziges Aufspaltelement umfasst, das in diesem Fall dann als zweidimensionales Gitter in Form eines Kreuzgitters ausgebildet ist. Darüber werden in einer ersten Aufspaltrichtung über ein sehr feines Gitter, das z.B. eine Gitterperiode kleiner als $2\mu m$ aufweist, die mindestens 3 Wellenlängen separiert. In einer zweiten Aufspaltrichtung werden dann mit einem groben Gitter, das z.B. eine Gitterperiode größer als $10\mu m$ aufweist, die mindestens 3 Teil-Interferenzstrahlenbündel aufgespalten, bevor diese dann die Polarisationselemente durchlaufen, um so die neun Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ zu erzeugen.

Ferner könnte alternativ zur dargestellten Variante der Detektionseinheit auch eine integrierte faseroptische Wellenlängenaufspaltung mit Hilfe sogenannter WDM-Demultiplexer erfolgen. Hierbei wird das Interferenzstrahlenbündel IF zunächst über eine geeignete Aufspalteinrichtung in drei räumlich getrennte Interferenzstrahlenbündel aufgespalten. Anschließend durchlaufen die Interferenzstrahlenbündel ein Polarisationselement, welches drei lineare Polarisationsfilter mit um jeweils 60° gegeneinander verdrehten Polarisationsrichtungen umfasst. Diese bewirken, dass die drei vom Aufspaltelement getrennten Interferenzstrahlenbündel in drei um jeweils 120° phasenverschobene Interferenzstrahlenbündel umgewandelt werden. Diese werden dann anschließend über Linsen, z.B. ausgeführt als diffraktives Linsenarray mit zwei Offset-Linsen und einer normalen diffraktiven Linse, in jeweils eine Lichtleitfaser eingekoppelt. Das heißt, die drei Interferenzstrahlenbündel werden in drei separaten Lichtleitfasern geführt, die jeweils mit sogenannten Wavelength-Division-Multiplexern verbunden sind, welche die Aufspaltung in die drei Wellenlängen übernehmen. Aus jedem Wavelength-Division-Multiplexer führen somit drei Lichtleitfasern, die das Licht auf die neun Detektorelemente des Detektorarrays leiten.

Grundsätzlich erfolgt in der Detektionseinheit 40 somit über das mindestens eine Aufspaltelement und das mindestens eine Polarisationselement eine wellenlängenabhängige Aufspaltung des Interferenzstrahlenbündels IF in mindestens drei Gruppen von Interferenzstrahlenbündeln $IF_{90}$, $IF_{210}$, $IF_{330}$, wobei jede der mindestens drei Gruppen von Interferenzstrahlenbündel $IF_{90}$, $IF_{210}$, $IF_{330}$ jeweils mindestens drei phasenverschobene Teil-Interferenzstrahlenbündel umfasst.

Die Weiterverarbeitung der Teil-Interferenzsignale $S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$ und die Bestimmung einer absoluten Positionsinformation bezüglich des Messreflektors erfolgt dann mit Hilfe der Signalverarbeitungs-Einheit 50, die in Figur 8 schematisch dargestellt ist; deren prinzipieller Aufbau sowie ein zur Auswertung nutzbares Verfahren werden im Anschluss erläutert.

Vor der Beschreibung des Auswerteverfahrens sei noch erläutert, wie im vorliegenden Beispiel vorzugsweise die verschiedenen Wellenlängen $\lambda_1$, $\lambda_2$, $\lambda_3$ gewählt werden, die von der Mehrwellenlängen-Lichtquelle der erfindungsgemäßen Vorrichtung emittiert werden.

So wird zunächst eine erste Wellenlänge $\lambda_1$ festgelegt, die der höchsten inkrementalen Auflösung der Positionsmessung entspricht. Die zwei weiteren Wellenlängen $\lambda_2$, $\lambda_3$ werden dann gemäß den beiden folgenden Bedingungen 2a, 2b gewählt:

$$\lambda_2 = \frac{CAF_1}{CAF_1 \pm 1} \cdot \lambda_1 \qquad \text{(Gl. 2a)}$$

$$\lambda_3 = \frac{\lambda_1 \cdot \lambda_2}{\lambda_1 \pm \lambda_2 \cdot \frac{CAF_2 \pm 1}{CAF_1 \cdot CAF_2}} \qquad \text{(Gl. 2b)}$$

Die Größen $CAF_1$ und $CAF_2$ aus den beiden Gleichungen 2a, 2b sind hierbei folgendermaßen definiert:

$$CAF_1 = \frac{\Lambda_1}{\lambda_1} \quad \text{(Gl. 3a)}$$

$$CAF_2 = \frac{\Lambda_3}{\Lambda_1} \quad \text{(Gl. 3b)}$$

mit:
$\lambda_1$, $\lambda_2$, $\lambda_3$ := emittierte Wellenlängen der Mehrwellenlängen-Lichtquelle

Vorzugsweise werden die Größen $CAF_1$ und $CAF_2$ im Bereich zwischen 10 und 200 gewählt.

Die Größen $\Lambda_1$, $\Lambda_2$, $\Lambda_3$ aus den Gleichungen 3a, 3b werden nachfolgend auch als erste synthetische Wellenlänge $\Lambda_1$, zweite synthetische Wellenlänge $\Lambda_2$ und dritte synthetische Wellenlänge $\Lambda_3$ bezeichnet, wobei sich diese Größen folgendermaßen ergeben:

$$\Lambda_1 = \left|\frac{\lambda_1 \cdot \lambda_2}{\lambda_1 - \lambda_2}\right| = CAF_1 \cdot \lambda_1 \qquad \text{(Gl. 4a)}$$

$$\Lambda_3 = \left|\frac{\Lambda_2}{\Lambda_1 - \Lambda_2}\right| \cdot \Lambda_1 = CAF_2 \cdot \Lambda_1 \qquad \text{(Gl. 4b)}$$

$$\Lambda_2 = \left|\frac{\lambda_2 \cdot \lambda_3}{\lambda_2 - \lambda_3}\right| \qquad \text{(Gl. 4c)}$$

Die dritte synthetische Wellenlänge $\Lambda_3$ resultiert damit als Schwebung aus der ersten und zweiten synthetischen Wellenlänge $\Lambda_1$, $\Lambda_2$. In einem möglichen Ausführungsbeispiel wird eine erste Wellenlänge $\lambda_1 = 1,560\mu m$ mit einer Signalperiode $SP_{\lambda 1} = 0,78pm$ gewählt. Mit den Größen $CAF_1 = CAF_2 = 120$ ergeben sich daraus für die erste und dritte synthetische Wellenlänge $\lambda_1$, $\Lambda_3$ die Signalperioden $SP_{\Lambda 1} \approx 93,6pm$ und $SP_{\Lambda 3} \approx 11,232mm$, wobei im vorliegenden Beispiel eines Michelson-Interferometers mit einem Retroreflektor grundsätzlich $2 \cdot SP_{\Lambda i =}\Lambda_i$ und $2 \cdot SP_{\lambda 1 =}\lambda_1$ gilt, mit i = 1..3.

Im Auswerteverfahren in der Signalverarbeitungs-Einheit 50 erfolgt nach einer Grobpositionsbestimmung des beweglichen Messreflektors die kaskadierte bzw. schrittweise Ermittlung des Absolutabstands L zwischen dem beweglichen Messreflektor und den stationären Interferometer-Komponenten mit Hilfe der ersten Wellenlänge $\lambda_1$ sowie der ersten und dritten synthetischen Wellenlänge $\Lambda_1$ und $\Lambda_3$. Das entsprechende Vorgehen wird nachfolgend beispielhaft erläutert.

Die von der Detektionseinheit erzeugten Teil-Interferenzsignale $S_{\lambda 1\_90}$, $S_{\lambda 1\_210}$, $S_{\lambda 1\_330}$, $S_{\lambda 2\_90}$, $S_{\lambda 2\_210}$, $S_{\lambda 2\_330}$, $S_{\lambda 3\_90}$, $S_{\lambda 3\_210}$, $S_{\lambda 3\_330}$ werden in der Signalverarbeitungs-Einheit 50 zunächst über Verstärker 51.1, 51.2, 51.3 verstärkt und mittels AD-Wandlern 52.1, 52.2, 52.3 digitalisiert. Für jede Wellenlänge $\lambda_1$, $\lambda_2$, $\lambda_3$ erfolgt dann über die Phasenberechnungseinheiten 53.1 - 53.3 die Berechnung eines Phasenwerts $\Phi_{\lambda 1}$, $\Phi_{\lambda 2}$, $\Phi_{\lambda 3}$. Aus den Phasenwerten $\Phi_{\lambda 1}$, $\Phi_{\lambda 2}$, $\Phi_{\lambda 3}$ werden daraufhin mit Hilfe der Differenzphasenberechnungseinheiten 54.1, 54.2, 54.3 die zu den verschiedenen synthetischen Wellenlängen $\Lambda_1$, $\Lambda_2$, $\Lambda_3$ gehörenden Differenzphasen $\Delta\Phi_{12}$, $\Delta\Phi_{23}$ und $\Delta\Phi$ in der nachfolgend aufgeführten Art und Weise ermittelt.

So wird für die erste synthetische Wellenlänge $\Lambda_1$ die zugehörige Differenzphase $\Delta\Phi_{12}$ über die Differenzphasenberechnungseinheit 54.1 wie folgt bestimmt:

$$\Delta\Phi_{12} = \Phi_{\lambda 1} - \Phi_{\lambda 2} \qquad \text{(Gl. 5a)}$$

Für die zweite synthetische Wellenlänge $\Lambda_2$ erfolgt die Bestimmung der Differenzphase $\Delta\Phi_{23}$ mit Hilfe der Differenzphasenberechnungseinheit 54.2 gemäß

$$\Delta\Phi_{23} = \Phi_{\lambda 2} - \Phi_{\lambda 3} \qquad \text{(Gl. 5b)}$$

Aus den beiden derart ermittelten Differenzphasen $\Delta\Phi_{12}$, $\Delta\Phi_{23}$ wird dann mittels der Differenzphasenberechnungseinheit 54.3 die Differenzphase $\Delta\Phi$ der dritten synthetischen Wellenlänge $\Lambda_3$ folgendermaßen bestimmt:

$$\Delta\Phi = \Delta\Phi_{12} - \Delta\Phi_{23} \qquad \text{(Gl. 5c)}$$

Die beiden auf die vorstehend erläuterte Art und Weise ermittelten Differenzphasen $\Delta\Phi_{12}$ sowie $\Delta\Phi$ der ersten und dritten synthetischen Wellenlänge $\Lambda_1$, $\Lambda_3$ werden daraufhin ebenso wie der Phasenwert $\Phi_{\lambda 1}$ der Wellenlänge $\lambda_1$ an eine Positionsbestimmungseinheit 55 übergeben.

Wie oben bereits angedeutet, ist zur Absolutpositionsbestimmung vorgesehen, zunächst eine grobe Absolutpositionsbestimmung des Messreflektors vorzunehmen. Dies kann beispielsweise über eine Laufzeitmessung zwischen dem Messreflektor und den stationären Komponenten der Interferometer-Einheit erfolgen. Für eine derartige Laufzeitmessung werden Lichtpulse zum beweglichen Messreflektor ausgesandt und die von dort reflektierten Photonen $S_{TOF}$ über ein Photoelement 56 in Stromimpulse umgewandelt. Eine dem Photoelement 56 nachgeordnete Time-to-Digital-Converter-Einheit 57 erlaubt die genaue Bestimmung der Zeitpunkte der Stromimpulse und damit der Laufzeit. Im Hinblick auf die grobe Positionsbestimmung ist dabei eine Genauigkeit im Bereich einiger mm ausreichend, was über die Laufzeitmessung grundsätzlich möglich ist. Das derart erzeugte Grobpositionssignal TOF wird dann ebenfalls der Positionsbestimmungseinheit 55 zugeführt.

In der Positionsbestimmungseinheit 55 erfolgt auf Grundlage der zugeführten Signale TOF, $\Delta\Phi_{23}$, $\Delta\Phi$ und $\Phi_{\lambda 1}$ dann in der nachstehend erläuterten Art und Weise in kaskadierter Form die Bestimmung des Absolutabstands L.

In einem ersten Schritt wird hierbei über die erfolgte Grobpositionsmessung und das dabei erzeugte Grobpositionssignal TOF die Absolutposition bzw. der Absolutabstand $L_{TOF}$ des Messreflektors mit einer Genauigkeit bestimmt, die kleiner als die halbe Signalperiode $SP_{\Lambda 3}$ der dritten synthetischen Wellenlänge $\Lambda_3$ ist, also im vorliegenden Beispiel mit einer Genauigkeit kleiner als 5mm.

Im nächsten Schritt erfolgt dann unter Heranziehung der Differenzphase $\Delta\phi$ der dritten synthetischen Wellenlänge $\Lambda_3$ die Bestimmung des Absolutabstands $L_{\Lambda 3}$ des Messreflektors. Dies erfolgt mit einer Genauigkeit, die kleiner als die halbe Signalperiode $SP_{\Lambda 2}$ der nächst kleineren Signalperiode $SP_{\Lambda 1}$ der ersten synthetischen Wellenlänge $\Lambda_1$ ist, also im vorliegenden Beispiel kleiner als 45$\mu$m. Der Absolutabstand $L_{\Lambda 3}$ wird dabei folgendermaßen ermittelt:

$$L_{\Lambda_3} = \frac{\Delta\Phi}{2\pi} \cdot SP_{\Lambda_3} + N \bullet SP_{\Lambda 3} \qquad \text{(Gl. 6a)}$$

Hierbei bestimmt sich die Größe N unter Verwendung des im vorherigen Schritt ermittelten Werts für $L_{TOF}$ gemäß

$$N = Round(\frac{L_{TOF}}{SP_{\Lambda_3}}) \qquad \text{(Gl. 6b)}$$

Über die Rundungsfunktion Round in Gleichung 6b wird auf eine ganze Zahl gerundet.

Im folgenden Schritt wird dann mit Hilfe der Differenzphase $\Delta\Phi_{12}$ Der ersten synthetischen Wellenlänge $\Lambda_1$ der Absolutabstand $L_{\Lambda 1}$ des Messreflektors bestimmt. Dies erfolgt nunmehr mit einer Genauigkeit, die kleiner als die halbe Signalperiode $SP_{\lambda 1}$ der ersten Wellenlänge $\lambda_1$ ist, also im vorliegenden Beispiel kleiner als 390nm. Der Absolutabstand $L_{\Lambda 1}$ wird dabei folgendermaßen ermittelt:

$$L_{\Lambda_1} = \frac{\Delta\Phi_{12}}{2\pi} \cdot SP_{\Lambda_1} + M \cdot SP_{\Lambda_1} \qquad \text{(Gl. 7a)}$$

Die Größe M ergibt sich dabei unter Verwendung des im vorherigen Schritt nach Gleichung 6a ermittelten Werts für $L_{\Lambda 3}$ gemäß

$$M = Round(\frac{L_{\Lambda_3}}{SP_{\Lambda_1}}) \qquad \text{(Gl. 7b)}$$

Im abschließenden Schritt wird dann unter Heranziehen des Phasenwerts $\phi_{\lambda 1}$ der Absolutabstand L mit der höchsten verfügbaren Genauigkeit bestimmt, nämlich mit der Auflösung der ersten Wellenlänge $\lambda_1$. Der Absolutabstand L ergibt sich dabei folgendermaßen:

$$L = \frac{\Phi_{\lambda_1}}{2\pi} \cdot SP_{\lambda 1} + n \cdot SP_{\lambda 1} \qquad \text{(Gl. 8a)}$$

Die Größe n ergibt sich dabei unter Verwendung des im vorherigen Schritt nach Gleichung 7a ermittelten Werts für $L_{\Lambda 1}$ gemäß

$$n = Round(\frac{L_{\Lambda_1}}{SP_{\lambda 1}}) \qquad \text{(Gl. 8b)}$$

Der auf diese Art und Weise in der Positionsbestimmungseinheit 55 ermittelte Absolutabstand L kann dann von der Signalverarbeitungs-Einheit 50 einer nicht in den Figuren dargestellten Folgeelektronik zur Weiterverarbeitung übergeben werden.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, mit Hilfe der Mehrwellenlängenlichtquelle mehr als drei verschiedene Wellenlängen zu erzeugen, um diese in einem geeigneten absolutinterferometrischen Verfahren zur Positionsbestimmung zu nutzen.

In der Mehrwellenlängenlichtquelle kann anstelle der Integration der Bragg-Gitter in eine laseraktive einzige Faser auch vorgesehen sein, mehrere Fasern parallel zueinander in der Faserhalterung anzuordnen und in jede Faser lediglich ein Bragg-Gitter zu integrieren.

Alternativ zur oben erläuterten Laufzeitmessung zur groben Absolutpositionsbestimmung können auch andere Messverfahren eingesetzt werden, beispielsweise könnten beim Einsatz der erfindungsgemäßen Vorrichtung in einer Werkzeugmaschine die dort vorhandenen Positionsmessgeräte zu einer groben Positionsbestimmung verwenden.

Desweiteren kann die laseraktive Faser statt mit Erbium auch mit anderen Dotierstoffen dotiert sein, wie z.B. Ytterbium, Thulium oder kombiniert mit Erbium und Ytterbium. Die laseraktive Faser kann ferner auch als nichtpolarisationserhaltende Faser sowie als polarisierende Faser ausgebildet sein, die nur eine Polarisation führt.

Es ist natürlich ebenfalls möglich, anstelle von drei um jeweils 120° phasenverschobenen Teil-Interferenzsignale vier um jeweils 90° phasenverschobene Teil-Interferenzsignale zu erzeugen.

Die erfindungsgemäße Vorrichtung zur interferometrischen Abstandsmessung kann neben der vorstehend erwähnten Verwendung in Mess- und/oder Kalibrieraufgaben auch zur bildgebenden Vermessung von Oberflächen eingesetzt werden. Die jeweilige Oberfläche dient dabei als Messreflektor und kann auch streuend ausgebildet sein; im Fall einer derartigen Anwendung ist der Messreflektor demzufolge nicht beweglich angeordnet. Durch punktuelles Abrastern der Oberfläche bzw. des Messreflektors und der Bestimmung des Absolutabstands zu jedem Punkt der Oberfläche kann auf diese Art und Weise die jeweilige Oberflächentopographie erfasst werden.

**Patentansprüche**

1. Vorrichtung zur interferometrischen Abstandsmessung mit

   - einer Mehrwellenlängen-Lichtquelle (10), die ein Strahlenbündel (S) mit mindestens drei unterschiedlichen Wellenlängen ($\lambda_1$, $\lambda_2$, $\lambda_3$) liefert und als Faserlaser ausgebildet ist, der mindestens drei verschiedene Bragg-Gitter (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) umfasst, deren Gitterkonstanten ($d_1$, $d_2$, $d_3$) auf die erzeugten Wellenlängen ($\lambda_1$, $\lambda_2$, $\lambda_3$) abgestimmt sind,
   - einer Interferometer-Einheit (30), die das Strahlenbündel (S) in ein Messstrahlenbündel (M) und ein Referenzstrahlenbündel (R) aufspaltet und einen Messreflektor (33) sowie einen stationären Referenzreflektor (34) umfasst, wobei das Messstrahlenbündel (M) in einem Messarm in Richtung des Messreflektors (33) propagiert und dort eine Rückreflexion erfährt und das Referenzstrahlenbündel (R) in einem Referenzarm in Richtung des stationären Referenzreflektors (34) propagiert und dort eine Rückreflexion erfährt, wobei die vom Mess- und Referenzreflektor (33, 34) zurückreflektierten Mess- und Referenzstrahlenbündel (M, R) sich interferierend in einem Interferenzstrahlenbündel (IF) überlagern,
   - einer Detektions-Einheit (40), über die eine Aufspaltung des Interferenzstrahlenbündels (IF) dergestalt erfolgt, dass pro Wellenlänge ($\lambda_1$, $\lambda_2$, $\lambda_3$) jeweils mehrere phasenverschobene Teil-Interferenzsignale ($S_{\lambda1\_90}$, $S_{\lambda1\_210}$, $S_{\lambda1\_330}$, $S_{\lambda2\_90}$, $3_{\lambda2\_210}$, $S_{\lambda2\_330}$, $S_{\lambda3\_90}$, $S_{\lambda3\_210}$, $S_{\lambda3\_330}$) resultieren und
   - einer Signalverarbeitungs-Einheit (50), die dazu eingerichtet ist, aus den Teil-Interferenzsignalen ($S_{\lambda1\_90}$ $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$) unterschiedlicher Wellenlängen ($\lambda_1$, $\lambda_2$, $\lambda_3$) eine absolute Positionsinformation (L) bezüglich des Messreflektors (33) zu bestimmen.

2. Vorrichtung nach Anspruch 1, wobei die Mehrwellenlängen-Lichtquelle (10) mindestens folgende Komponenten umfasst:

   - eine Pump-Lichtquelle (11),
   - mindestens drei Bragg-Gitter (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$), die in ein oder mehrere laseraktive Fasern (13; 113; 213; 313) integriert sind, wobei jedes der Bragg-Gitter (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) einen Phasensprung (13.2; 113.2; 213.2; 313.2) der Größe $\pi$ aufweist,
   - eine Einkoppeloptik (12), über die die von der Pump-Lichtquelle (11) emittierte Pumpstrahlung in die mindestens eine laseraktive Faser (13; 113; 213; 313) einkoppelbar ist.

3. Vorrichtung nach Anspruch 2, wobei die mindestens drei Bragg-Gitter ($13.1\_\lambda_1$, $13.1\_\lambda_2$, $13.1\_\lambda_3$) entlang der Fasererstreckungsrichtung vollständig überlappend in der mindestens einen laseraktiven Faser (13) angeordnet sind, so dass die Phasensprünge (13.2) aller Bragg-Gitter ($13.1\_\lambda_1$, $13.1\_\lambda_2$, $13.1\_\lambda_3$) an der gleichen Stelle liegen.

4. Vorrichtung nach Anspruch 2, wobei die mindestens drei Bragg-Gitter ($113.1\_\lambda_1$, $113.1\_\lambda_2$, $113.1\_\lambda_3$; $213.1\_\lambda_1$, $213.1\_\lambda_2$, $213.1\_\lambda_3$; $313.1\_\lambda_1$, $313.1\_\lambda_2$, $313.1\_\lambda_3$) entlang der Fasererstreckungsrichtung um bestimmte Versatzabstände (V) zueinander verschoben angeordnet sind, so dass die Phasensprünge (113.2; 213.2; 313.2) aller Bragg-Gitter ($113.1\_\lambda_1$, $113.1\_\lambda_2$, $113.1\_\lambda_3$; $213.1\_\lambda_1$, $213.1\_\lambda_2$, $213.1\_\lambda_3$; $313.1\_\lambda_1$, $313.1\_\lambda_2$, $313.1\_\lambda_3$) entlang der Fasererstreckungsrichtung ebenfalls um die Versatzabstände (V) zueinander verschoben sind.

5. Vorrichtung nach Anspruch 4, wobei im Fall dreier Bragg-Gitter und

    a) bei Versatzabständen (V) zwischen 0% und 50% der effektiven Gitterlänge eines Bragg-Gitters die laseraktive Faser (113) erste Gitterabschnitte (113.1a) mit Bragg-Gittern ($113.1\_\lambda_1$, $113.1\_\lambda_2$, $113.1\_\lambda_3$) mit einer Gitterkonstante ($d_1$, $d_2$, $d_3$), zweite Gitterabschnitte (113.1b) mit zwei überlappenden Bragg-Gittern ($113.1\_\lambda_1$, $113.1\_\lambda_2$, $113.1\_\lambda_3$) mit unterschiedlichen Gitterkonstanten ($d_1$, $d_2$, $d_3$) sowie dritte Gitterabschnitte (113.1c) mit drei überlappenden Bragg-Gittern ($113.1\_\lambda_1$, $113.1\_\lambda_2$, $113.1\_\lambda_3$) mit unterschiedlichen Gitterkonstanten ($d_1$, $d_2$, $d_3$) aufweist, oder
    b) bei Versatzabständen (V) zwischen 50% und 100% der effektiven Gitterlänge eines Bragg-Gitters die laseraktive Faser (213) erste Gitterabschnitte (213.1a) mit Bragg-Gittern ($213.1\_\lambda_1$, $213.1\_\lambda_2$, $213.1\_\lambda_3$) einer Gitterkonstanten ($d_1$, $d_2$, $d_3$) und zweite Gitterabschnitte (213.1b) mit zwei überlappenden Bragg-Gittern ($213.1\_\lambda_1$, $213.1\_\lambda_2$, $213.1\_\lambda_3$) mit unterschiedlichen Gitterkonstanten ($d_1$, $d_2$, $d_3$) aufweist, oder
    c) bei Versatzabständen von 100% der effektiven Gitterlänge eines Bragg-Gitters die laseraktive Faser (313) ausschließlich Gitterabschnitte (313.1a) mit Bragg-Gittern ($313.1\_\lambda_1$, $313.1\_\lambda_2$, $313.1\_\lambda_3$) einer Gitterkonstanten ($d_1$, $d_2$, $d_3$) aufweist.

6. Vorrichtung nach Anspruch 2, wobei die mindestens eine laseraktive Faser (13; 113; 213; 313) als Erbium-dotierte Singlemode-Glasfaser ausgebildet ist, die Laserstrahlung mit einer definierten Polarisationsrichtung emittiert.

7. Vorrichtung nach Anspruch 2, wobei die mindestens eine laseraktive Faser (13; 113; 213; 313) unter Zug zwischen zwei Fixierungspunkten (17, 18) in einer Faserhalterung (14) angeordnet ist und die mindestens drei Bragg-Gitter ($113.1\_\lambda_1$, $113.1\_\lambda_2$, $113.1\_\lambda_3$; $213.1\_\lambda_1$, $213.1\_\lambda_2$, $213.1\_\lambda_3$; $313.1\_\lambda_1$, $313.1\_\lambda_2$, $313.1\_\lambda_3$) im Bereich zwischen den beiden Fixierungspunkten (17, 18) in der Faserhalterung (14) angeordnet sind.

8. Vorrichtung nach Anspruch 2, wobei eine Regelungseinheit (24) über ein oder mehrere Stellelemente auf die Mehrwellenlängen-Lichtquelle (10) einwirkt, um Laserstrahlung mit definierten Wellenlängen ($\lambda_1$, $\lambda_2$, $\lambda_3$) zu erzeugen und wobei als Eingangssignal der Regelungseinheit (24) ein elektrisches Signal fungiert, das aus einem optischen Signal lediglich einer der verschiedenen Wellenlängen ($\lambda_1$, $\lambda_2$, $\lambda_3$) abgeleitet ist.

9. Vorrichtung nach Anspruch 8, wobei die Stellelemente mindestens eines der folgenden Mittel umfassen:

    a) Piezo-Aktuator-Einheit (15) zum Ausüben eines definierten mechanischen Zugs auf die mindestens eine laseraktive Faser (13; 113; 213; 313)
    b) Temperierungs-Einheit (16) zum Einstellen einer definierten Temperatur der mindestens einen laseraktiven Faser (13; 113; 213; 313)
    c) Stromquelle (11.1) zum Einstellen eines definierten Pumpstroms einer Pump-Lichtquelle (11) für die mindestens eine laseraktive Faser (13; 113; 213; 313)

10. Vorrichtung nach mindestens einem der vorhergehenden Ansprüche, wobei die Mehrwellenlängen-Lichtquelle (10) derart eingerichtet ist, das diese Strahlung mit einer ersten Wellenlänge ($\lambda_1$) und zwei weiteren Wellenlängen ($\lambda_2$, $\lambda_3$) emittiert, wobei für die beiden weiteren Wellenlängen ($\lambda_2$, $\lambda_3$)

$$\lambda_2 = \frac{CAF_1}{CAF_1 \pm 1} \cdot \lambda_1$$

und

$$\lambda_3 = \frac{\lambda_1 \cdot \lambda_2}{\lambda_1 \pm \lambda_2 \cdot \dfrac{CAF_2 \pm 1}{CAF_1 \cdot CAF_2}}$$

gilt, wobei

$$CAF_1 = \frac{\Lambda_1}{\lambda_1} \quad \text{und} \quad CAF_2 = \frac{\Lambda_3}{\lambda_1}$$

mit:

$$\lambda_1, \lambda_2, \lambda_3 := \text{emittierte Wellenlängen der Mehrwellenlängen-Lichtquelle}$$

$$\Lambda_1 = \left| \frac{\lambda_1 \cdot \lambda_2}{\lambda_1 - \lambda_2} \right| = CAF_1 \cdot \lambda_1$$

$$\Lambda_2 = \left| \frac{\lambda_2 \cdot \lambda_3}{\lambda_2 - \lambda_3} \right|$$

$$\Lambda_3 = \left| \frac{\Lambda_2}{\Lambda_1 - \Lambda_2} \right| \cdot \Lambda_1 = CAF_2 \cdot \Lambda_1$$

11. Vorrichtung nach mindestens einem der vorhergehenden Ansprüche, wobei die Interferometer-Einheit (30) eine Strahl-Aufspalteinheit (31), den entlang mindestens einer Messrichtung (x) beweglichen Messreflektor (33), den stationären Referenzreflektor (34) sowie eine Strahl-Vereinigungseinheit (31) umfasst und über die Strahl-Aufspalteinheit (31) die Aufspaltung des Strahlenbündels (S) in ein Mess- und ein Referenzstrahlenbündel (M, R) erfolgt und über die Strahl-Vereinigungseinheit (31) eine Überlagerung der vom Mess- und Referenzreflektor (33, 34) zurückreflektierten Mess- und Referenzstrahlenbündel (M, R) zum Interferenzstrahlenbündel (IF) erfolgt.

12. Vorrichtung nach mindestens Anspruch 11, wobei die Strahl-Aufspalteinheit (31) und die Strahl-Vereinigungseinheit (31) gemeinsam in einem Strahlteiler-Würfel ausgebildet sind.

13. Vorrichtung nach mindestens einem der vorhergehenden Ansprüche, wobei die Detektionseinheit (40) mindestens ein Aufspaltelement (41, 42), mindestens ein Polarisationselement (43) sowie ein nachgeordnetes Detektorarray (46) bestehend aus mindestens neun optoelektronischen Detektorelementen (46.1, .... 46.9) umfasst und wobei über das mindestens eine Aufspaltelement (41, 42) und das mindestens eine Polarisationselement (43) eine wellenlängenabhängige Aufspaltung des Interferenzstrahlenbündels (IF) in mindestens drei Gruppen von Interferenzstrahlenbündeln ($IF_{90}$, $IF_{210}$, $IF_{330}$) erfolgt und jede der mindestens drei Gruppen von Interferenzstrahlenbündeln ($IF_{90}$, $IF_{210}$, $IF_{330}$) jeweils mindestens drei phasenverschobene Teil-Interferenzstrahlenbündel umfasst.

14. Vorrichtung nach Anspruch 13, wobei die Detektionseinheit (40) zwei Aufspaltelemente (41, 42) umfasst und über ein Aufspaltelement (41) eine Aufspaltung in mehrere phasenverschobene Interferenzstrahlenbündel ($IF_{90}$, $IF_{210}$, $IF_{330}$) erfolgt und über das andere Aufspaltelement (42) eine wellenlängenabhängige Aufspaltung in mehrere Teil-Interferenzstrahlenbündel erfolgt.

15. Vorrichtung nach mindestens einem der vorhergehenden Ansprüche, wobei die Signalverarbeitungseinheit (50) dazu eingerichtet ist,

- aus den phasenverschobenen elektrischen Teil-Interferenzsignalen ($S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$; $S_{\lambda3\_330}$) der unterschiedlichen Wellenlängen ($\lambda_1$, $\lambda_2$, $\lambda_3$) pro Wellenlänge ($\lambda_1$, $\lambda_2$, $\lambda_3$)

einen Phasenwert ($\Phi_{\lambda 1}$, $\Phi_{\lambda 2}$, $\Phi_{\lambda 3}$) zu bestimmen,

- aus den Phasenwerten ($\Phi_{\lambda 1}$, $\Phi_{\lambda 2}$, $\Phi_{\lambda 3}$) mehrere Differenzphasen ($\Delta\Phi_{12}$, $\Delta\Phi_{23}$ und $\Delta\Phi$) zu bilden, die jeweils unterschiedlichen synthetischen Wellenlängen ($\Lambda_1$, $\Lambda_2$, $\Lambda_3$) zugeordnet sind,

- aus einem über eine zusätzliche Grobpositionsmessung gewonnenen Grobpositionssignal (TOF) sowie den Differenzphasen ($\Delta\Phi_{12}$, $\Delta\Phi_{23}$ und $\Delta\Phi$) eine hochauflösende absolute Positionsinformation (L) bezüglich des Messreflektors (33) zu bestimmen.

**Claims**

1. Apparatus for interferometric distance measurement, having

   - a multiple-wavelength light source (10), which provides a beam (S) with at least three different wavelengths ($\lambda_1$, $\lambda_2$, $\lambda_3$) and is designed as a fibre laser comprising at least three different Bragg gratings (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$), the grating constants ($d_1$, $d_2$, $d_3$) of which are tuned to the generated wavelengths ($\lambda_1$, $\lambda_2$, $\lambda_3$),
   - an interferometer unit (30), which splits the beam (S) into a measurement beam (M) and a reference beam (R) and comprises a measurement reflector (33) and a stationary reference reflector (34), wherein the measurement beam (M) propagates in a measurement arm in the direction of the measurement reflector (33) and undergoes a back reflection there and the reference beam (R) propagates in a reference arm in the direction of the stationary reference reflector (34) and undergoes a back reflection there, wherein the measurement and reference beams (M, R) that are back-reflected by the measurement and reference reflectors (33, 34) superpose in an interfering manner to form an interference beam (IF),
   - a detection unit (40), via which the interference beam (IF) is split in a manner such that in each case a plurality of phase-shifted partial interference signals ($S_{\lambda 1\_90}$, $S_{\lambda 1\_210}$, $S_{\lambda 1\_330}$, $S_{\lambda 2\_90}$, $S_{\lambda 2\_210}$, $S_{\lambda 2\_330}$, $S_{\lambda 3\_90}$, $S_{\lambda 3\_210}$, $S_{\lambda 3\_330}$) result per wavelength ($\lambda_1$, $\lambda_2$, $\lambda_3$), and
   - a signal processing unit (50), which is configured to determine a piece of absolute position information (L) with respect to the measurement reflector (33) from the partial interference signals ($S_{\lambda 1\_90}$, $S_{\lambda 1\_210}$, $S_{\lambda 1\_\_330}$, $S_{\lambda 2\_90}$, $S_{\lambda 2\_210}$, $S_{\lambda 2\_330}$, $S_{\lambda 3\_90}$, $S_{\lambda 3\_210}$, $S_{\lambda 3\_330}$) of different wavelengths ($\lambda_1$, $\lambda_2$, $\lambda_3$).

2. Apparatus according to Claim 1, wherein the multiple-wavelength light source (10) comprises at least the following components:

   - a pump light source (11),
   - at least three Bragg gratings (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$), which are integrated into one or multiple laser-active fibres (13; 113; 213; 313), wherein each of the Bragg gratings (13.1_$\lambda_1$, 13.1_$\lambda_2$, 13.1_$\lambda_3$; 113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) has a phase jump (13.2; 113.2; 213.2; 313.2) of the size $\pi$,
   - a coupling-in optical unit (12), via which the pump radiation emitted by the pump light source (11) is able to be coupled into the at least one laser-active fibre (13; 113; 213; 313).

3. Apparatus according to Claim 2, wherein the at least three Bragg gratings (13.1_$\lambda_1$, 13.1_$\lambda_2$, 13.1_$\lambda_3$) are arranged in the at least one laser-active fibre (13) so as to completely overlap along the fibre extent direction such that the phase jumps (13.2) of all Bragg gratings (13.1_$\lambda_1$, 13.1_$\lambda_2$, 13.1_$\lambda_3$) lie at the same location.

4. Apparatus according to Claim 2, wherein the at least three Bragg gratings (113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) are arranged displaced relative to one another by specific offset distances (V) along the fibre extent direction, with the result that the phase jumps (113.2; 213.2; 313.2) of all Bragg gratings (113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) are displaced relative to one another likewise by the offset distances (V) along the fibre extent direction.

5. Apparatus according to Claim 4, wherein in the case of three Bragg gratings and

   a) with offset distances (V) between 0% and 50% of the effective grating length of a Bragg grating, the laser-active fibre (113) has first grating sections (113.1a) with Bragg gratings (113.1_$\lambda_1$, 113.1_$\lambda_2$, 113.1_$\lambda_3$) with one grating constant ($d_1$, $d_2$, $d_3$), second grating sections (113.1b) with two overlapping Bragg gratings (113.1_$\lambda_1$, 113.1_$\lambda_2$, 113.1_$\lambda_3$) with different grating constants ($d_1$, $d_2$, $d_3$) and third grating sections (113.1c) with three overlapping Bragg gratings (113.1_$\lambda_1$, 113.1_$\lambda_2$, 113.1_$\lambda_3$) with different grating constants ($d_1$, $d_2$, $d_3$), or
b) with offset distances (V) between 50% and 100% of the effective grating length of a Bragg grating, the laser-active fibre (213) has first grating sections (213.1a) with Bragg gratings (213.1_$\lambda_1$, 213.1_$\lambda_2$, 213.1_$\lambda_3$) of one grating constant ($d_1$, $d_2$, $d_3$) and second grating sections (213.1b) with two overlapping Bragg gratings (213.1_$\lambda_1$, 213.1_$\lambda_2$, 213.1_$\lambda_3$) with different grating constants ($d_1$, $d_2$, $d_3$), or
c) with offset distances of 100% of the effective grating length of a Bragg grating, the laser-active fibre (313) has only grating sections (313.1a) with Bragg gratings (313.1_$\lambda_1$, 313.1_$\lambda_2$, 313.1_$\lambda_3$) of one grating constant ($d_1$, $d_2$, $d_3$) .

6. Apparatus according to Claim 2, wherein the at least one laser-active fibre (13; 113; 213; 313) is designed as an erbium-doped single-mode glass fibre emitting laser radiation having a defined polarization direction.

7. Apparatus according to Claim 2, wherein the at least one laser-active fibre (13; 113; 213; 313) is arranged under strain between two fixing points (17, 18) in a fibre holder (14) and the at least three Bragg gratings (113.1_$\lambda_1$, 113.1_$\lambda_2$, 113.1_$\lambda_3$; 213.1_$\lambda_1$, 213.1_$\lambda_2$, 213.1_$\lambda_3$; 313.1_$\lambda_1$, 313.1_$\lambda_2$, 313.1_$\lambda_3$) are arranged in the region between the two fixing points (17, 18) in the fibre holder (14).

8. Apparatus according to Claim 2, wherein a closed-loop control unit (24) acts on the multiple-wavelength light source (10) via one or more actuating elements in order to generate laser radiation having defined wavelengths ($\lambda_1$, $\lambda_2$, $\lambda_3$), and wherein an electrical signal derived from an optical signal of merely one of the different wavelengths ($\lambda_1$, $\lambda_2$, $\lambda_3$) acts as the input signal of the closed-loop control unit (24).

9. Apparatus according to Claim 8, wherein the actuating elements comprise at least one of the following means:

   a) piezo actuator unit (15) for exerting a defined mechanical strain on the at least one laser-active fibre (13; 113; 213; 313),
   b) temperature-control unit (16) for setting a defined temperature of the at least one laser-active fibre (13; 113; 213; 313),
   c) current source (11.1) for setting a defined pump current of a pump light source (11) for the at least one laser-active fibre (13; 113; 213; 313).

10. Apparatus according to at least one of the preceding claims, wherein the multiple-wavelength light source (10) is configured such that it emits radiation having a first wavelength ($\lambda_1$) and two further wavelengths ($\lambda_2$, $\lambda_3$), wherein, for the two further wavelengths ($\lambda_2$, $\lambda_3$),

$$\lambda_2 = \frac{CAF_1}{CAF_1 \pm 1} \cdot \lambda_1$$

and

$$\lambda_3 = \frac{\lambda_1 \cdot \lambda_2}{\lambda_1 \pm \lambda_2 \cdot \frac{CAF_2 \pm 1}{CAF_1 \cdot CAF_2}} \quad ,$$

wherein

$$CAF_1 = \frac{\Lambda_1}{\lambda_1} \text{ and } CAF_2 = \frac{\Lambda_3}{\Lambda_1},$$

with

$\lambda_1, \lambda_2, \lambda_3$ := emitted wavelengths of the multiple-wavelength light source

$$\Lambda_1 = \left| \frac{\lambda_1 \cdot \lambda_2}{\lambda_1 - \lambda_2} \right| = CAF_1 \cdot \lambda_1$$

$$\Lambda_2 = \left| \frac{\lambda_2 \cdot \lambda_3}{\lambda_2 - \lambda_3} \right|$$

$$\Lambda_3 = \left| \frac{\Lambda_2}{\Lambda_1 - \Lambda_2} \right| \cdot \Lambda_1 = CAF_2 \cdot \Lambda_1 \, .$$

11. Apparatus according to at least one of the preceding claims, wherein the interferometer unit (30) comprises a beam-splitting unit (31), the measurement reflector (33) that is movable along at least one measurement direction (x), the stationary reference reflector (34), and a beam-combining unit (31), and the splitting of the beam (S) into a measurement and a reference beam (M, R) is effected by way of the beam-splitting unit (31), and a superposition of the measurement and reference beams (M, R), reflected back by the measurement and reference reflectors (33, 34), to form the interference beam (IF) is effected by way of the beam-combining unit (31).

12. Apparatus according to at least Claim 11, wherein the beam-splitting unit (31) and the beam-combining unit (31) are formed together in a beam splitter cube.

13. Apparatus according to at least one of the preceding claims, wherein the detection unit (40) comprises at least one splitting element (41, 42), at least one polarization element (43) and a downstream detector array (46), consisting of at least nine optoelectronic detector elements (46.1, ..., 46.9), and wherein a wavelength-dependent splitting of the interference beam (IF) into at least three groups of interference beams ($IF_{90}$, $IF_{210}$, $IF_{330}$) is effected by way of the at least one splitting element (41, 42) and the at least one polarization element (43) and each of the at least three groups of interference beams ($IF_{90}$, $IF_{210}$, $IF_{330}$) comprises in each case at least three phase-shifted partial interference beams.

14. Apparatus according to Claim 13, wherein the detection unit (40) comprises two splitting elements (41, 42), and splitting into a plurality of phase-shifted interference beams ($IF_{90}$, $IF_{210}$, $IF_{330}$) is effected by way of one splitting element (41), and a wavelength-dependent splitting into a plurality of partial interference beams is effected by way of the other splitting element (42).

15. Apparatus according to at least one of the preceding claims, wherein the signal processing unit (50) is configured

- to determine a phase value ($\phi_{\lambda 1}$, $\phi_{\lambda 2}$, $\phi_{\lambda 3}$) per wavelength ($\lambda_1$, $\lambda_2$, $\lambda_3$) from the phase-shifted electrical partial interference signals ($S_{\lambda 1\_90}$, $S_{\lambda 1\_210}$, $S_{\lambda 1\_330}$, $S_{\lambda 2\_90}$, $S_{\lambda 2\_210}$, $S_{\lambda 2\_330}$, $S_{\lambda 3\_90}$, $S_{\lambda 3\_210}$, $S_{\lambda 3\_330}$) of the different wavelengths ($\lambda_1$, $\lambda_2$, $\lambda_3$),
- to form from the phase values ($\phi_{\lambda 1}$, $\phi_{\lambda 2}$, $\phi_{\lambda 3}$) a plurality of difference phases ($\Delta\phi_{12}$, $\Delta\phi_{23}$ and $\Delta\phi$), which are each assigned to different synthetic wavelengths ($\Lambda_1$, $\Lambda_2$, $\Lambda_3$),
- to determine a piece of high-resolution absolute position information (L) with respect to the measurement reflector (33) from a rough position signal (TOF) obtained by way of an additional rough position measurement and the difference phases ($\Delta\phi_{12}$, $\Delta\phi_{23}$ and $\Delta\phi$).

**Revendications**

1. Dispositif de mesure de distance interférométrique comprenant

- une source de lumière multi-longueur d'onde (10) qui fournit un faisceau de rayons (S) comprenant au moins trois longueurs d'onde différentes ($\lambda_1$, $\lambda_2$, $\lambda_3$) et qui est conçue comme un laser à fibre optique qui comprend au moins trois réseaux de Bragg différents ($13.1\_\lambda_1$, $13.1\_\lambda_2$, $13.1\_\lambda_3$ ; $113.1\_\lambda_1$, $113.1\_\lambda_2$, $113.1\_\lambda_3$ ; $213.1\_\lambda_1$, $213.1\_\lambda_2$, $213.1\_\lambda_3$ ; $313.1\_\lambda_1$, $313.1\_\lambda_2$, $313.1\_\lambda_3$) dont les constantes de réseau ($d_1$, $d_2$, $d_3$) sont adaptées aux longueurs d'onde générées ($\lambda_1$, $\lambda_2$, $\lambda_3$),
- une unité interférométrique (30) qui divise le faisceau de rayons (S) en un faisceau de rayons de mesure (M) et un faisceau de rayons de référence (R) et comprend un réflecteur de mesure (33) et un réflecteur de référence fixe (34), le faisceau de rayons de mesure (M) se propageant dans un bras de mesure en direction du réflecteur de mesure (33) où il subit une rétro-réflexion et le faisceau de rayons de référence (R) se propageant dans un bras de référence en direction du réflecteur de référence fixe (34) où il subit une rétro-réflexion, les faisceaux de rayons de référence (M, R) rétro-réfléchis par les réflecteurs de mesure et de référence (33, 34) se superposant dans un faisceau de rayons d'interférence (IF) tout en interférant,

- une unité de détection (40), qui permet d'effectuer une division du faisceau de rayons interférence (IF) de telle sorte qu'il en résulte à chaque fois plusieurs signaux d'interférence partiels déphasés ($S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$) par longueur d'onde ($\lambda_1$, $\lambda_2$, $\lambda_3$) et

- une unité de traitement de signal (50), qui est conçue pour déterminer à partir des signaux d'interférence partiels ($S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$) de différentes longueurs d'onde ($\lambda_1$, $\lambda_2$, $\lambda_3$) une information de position absolue (L) par rapport au réflecteur de mesure (33).

2. Dispositif selon la revendication 1, la source de lumière multi-longueurs d'onde (10) comprenant au moins les composants suivants :

   - une source de lumière de pompage (11),
   - au moins trois réseaux de Bragg (13.1_$\lambda_1$, 13.1_$\lambda_2$, 13.1_$\lambda_3$ ; 113.1_$\lambda_1$, 113.1_$\lambda_2$, 113.1_$\lambda_3$; 213.1_$\lambda_1$, 213.1_$\lambda_2$, 213.1_$\lambda_3$ ; 313.1_$\lambda_1$, 313.1_$\lambda_2$, 313.1_$\lambda_3$) qui sont intégrés dans une ou plusieurs fibres laser-actives (13 ; 113 ; 213 ; 313), chacun des réseaux de Bragg (13.1_$\lambda_1$, 13.1_$\lambda_2$, 13.1_$\lambda_3$ ; 113.1_$\lambda_1$, 113.1_$\lambda_2$, 113.1_$\lambda_3$ ; 213.1_$\lambda_1$, 213.1_$\lambda_2$, 213.1_$\lambda_3$ ; 313.1_$\lambda_1$, 313.1_$\lambda_2$, 313.1_$\lambda_3$) présentant un saut de phase (13.2 ; 113.2 ; 213.2 ; 313.2) de dimension $\pi$,
   - une optique d'injection par couplage (12), qui permet d'injecter par couplage le rayonnement de pompage, émis par la source de lumière de pompage (11), dans l'au moins une fibre laser-active (13 ; 113 ; 213 ; 313).

3. Dispositif selon la revendication 2, les au moins trois réseaux de Bragg (13.1_$\lambda_1$, 13.1_$\lambda_2$, 13.1_$\lambda_3$) étant disposés à recouvrement total dans l'au moins une fibre laser-active (13) dans la direction d'extension de fibre de sorte que les sauts de phase (13.2) de tous les réseaux de Bragg (13.1_$\lambda_1$, 13.1_$\lambda_2$, 13.1_$\lambda_3$) soient au même endroit.

4. Dispositif selon la revendication 2, les au moins trois réseaux de Bragg (113.1_$\lambda_1$, 113.1_$\lambda_2$, 113.1_$\lambda_3$ ; 213.1_$\lambda_1$, 213.1_$\lambda$2, 213.1_$\lambda_3$; 313.1_$\lambda_1$, 313.1_$\lambda_2$, 313.1_$\lambda_3$) étant disposés de manière décalée les uns par rapport aux autres de distances de décalage déterminées (V) dans la direction d'extension de fibre de sorte que les sauts de phase (113.2 ; 213.2 ; 313.2) de tous les réseaux de Bragg (113.1_$\lambda_1$, 113.1_$\lambda_2$, 113.1_$\lambda_3$ ; 213.1_$\lambda_1$, 213.1_$\lambda_2$, 213.1_$\lambda_3$ ; 313.1_$\lambda_1$, 313.1_$\lambda_2$, 313.1_$\lambda_3$) soient également décalés les uns des autres des distances de décalage (V) dans la direction d'extension de fibre.

5. Dispositif selon la revendication 4, dans le cas de trois réseaux de Bragg et

   a) de distances de décalage (V) comprises entre 0 % et 50 % de la longueur de réseau efficace d'un réseau de Bragg, la fibre laser active (113) comportant des premières portions de réseau (113.1a) pourvues de réseaux de Bragg (113.1_$\lambda_1$, 113.1_$\lambda_2$, 113.1_$\lambda_3$) ayant une constante de réseau ($d_1$, $d_2$, $d_3$), des deuxièmes portions de réseau (113.1b) pourvues de deux réseaux de Bragg superposés (113.1_$\lambda_1$, 113.1_$\lambda_2$, 113.1_$\lambda_3$) ayant différentes constantes de réseau ($d_1$, $d_2$, $d_3$) et des troisièmes portions de réseau (113.1c) pourvues de trois réseaux de Bragg (113.1_$\lambda_1$, 113.1_$\lambda_2$, 113.1_$\lambda_3$) qui se chevauchent ayant des constantes de réseau différentes ($d_1$, $d_2$, $d_3$), ou
   b) dans le cas de distances de décalage (V) comprises entre 50 % et 100 % de la longueur de réseau efficace d'un réseau de Bragg, les fibres laser-actives (213) comportant des premières portions de réseau (213.1a) pourvues de réseaux de Bragg (213.1_$\lambda_1$, 213.1_$\lambda$2, 213.1_$\lambda_3$) ayant une constante de réseau ($d_1$, $d_2$, $d_3$) et des deuxièmes portions de réseau (213.1b) pourvues de deux réseaux de Bragg superposés (213.1_$\lambda_1$, 213.1_$\lambda_2$, 213.1_$\lambda_3$) ayant des constantes de réseau différentes ($d_1$, $d_2$, $d_3$), ou
   c) dans le cas de distances de décalage de 100 % de la longueur de réseau efficace d'un réseau de Bragg, la fibre laser-active (313) comportant exclusivement des portions de réseau (313.1a) pourvues de réseaux de Bragg (313.1_$\lambda_1$, 313.1_$\lambda_2$, 313.1_$\lambda_3$) ayant une constante de réseau ($d_1$, $d_2$, $d_3$).

6. Dispositif selon la revendication 2, l'au moins une fibre laser-active (13 ; 113 ; 213 ; 313) étant conçue comme une fibre de verre monomode dopée à l'erbium, le rayonnement laser émettant avec une direction de polarisation définie.

7. Dispositif selon la revendication 2, l'au moins une fibre laser-active (13 ; 113 ; 213 ; 313) étant disposée sous contrainte entre deux points de fixation (17, 18) dans un support de fibre (14) et les au moins trois réseaux de Bragg

(113.1_$\lambda_1$, 113.1_$\lambda_2$, 113.1_$\lambda_3$ ; 213.1_$\lambda_1$, 213.1_$\lambda_2$, 213.1_$\lambda_3$ ; 313.1_$\lambda_1$, 313.1_$\lambda_2$, 313.1_$\lambda_3$) étant disposés dans le support de fibre (14) dans la zone située entre les deux points de fixation (17, 18).

8. Dispositif selon la revendication 2, une unité de commande (24) agissant sur la source de lumière multi-longueurs d'onde (10) par le biais d'un ou plusieurs éléments de réglage afin de générer un rayonnement laser ayant des longueurs d'onde définies ($\lambda_1$, $\lambda_2$, $\lambda_3$) et un signal électrique qui est dérivé d'un signal optique d'une seule des différentes longueurs d'onde ($\lambda_1$, $\lambda_2$, $\lambda_3$), servant de signal d'entrée de l'unité de régulation (24).

9. Dispositif selon la revendication 8, les éléments de réglage comprenant l'un au moins des moyens suivants :

   a) une unité d'actionnement piézo (15) destinée à exercer une contrainte mécanique définie sur l'au moins une fibre laser-active (13 ; 113 ; 213 ; 313),
   b) une unité de régulation de température (16) destinée à régler une température définie de l'au moins une fibre laser-active (13 ; 113 ; 213 ; 313),
   c) une source de courant (11.1) destinée à régler un courant de pompage défini d'une source de lumière de pompage (11) destinée à l'au moins une fibre laser-active (13 ; 113 ; 213 ; 313).

10. Dispositif selon l'une au moins des revendications précédentes, la source de lumière multi-longueurs d'onde (10) étant conçue pour émettre un rayonnement ayant une première longueur d'onde ($\lambda_1$) et deux autres longueurs d'onde ($\lambda_2$, $\lambda_3$), avec pour les deux autres longueurs d'onde ($\lambda_2$, $\lambda_3$)

$$\lambda_2 = \frac{CAF_1}{CAF_1 \pm 1} \cdot \lambda_1$$

et

$$\lambda_3 = \frac{\lambda_1 \cdot \lambda_2}{\lambda_1 \pm \lambda_2 \cdot \dfrac{CAF_2 \pm 1}{CAF_1 \cdot CAF_2}}$$

avec

$$CAF_1 = \frac{\Lambda_1}{\lambda_1} \quad \text{et} \quad CAF_2 = \frac{\Lambda_3}{\Lambda_1}$$

avec

$\lambda_1$, $\lambda_2$, $\lambda_3$ = longueurs d'onde émises de la source de lumière multi-longueurs d'onde

$$\Lambda_1 = \left| \frac{\lambda_1 \cdot \lambda_2}{\lambda_1 - \lambda_2} \right| = CAF_1 \cdot \lambda_1$$

$$\Lambda_2 = \left| \frac{\lambda_2 \cdot \lambda_3}{\lambda_2 - \lambda_3} \right|$$

$$\Lambda_3 = \left| \frac{\Lambda_1}{\Lambda_1 - \Lambda_2} \right| \cdot \Lambda_1 = CAF_2 \cdot \Lambda_1$$

11. Dispositif selon l'une au moins des revendications précédentes, l'unité interférométrique (30) comprenant une unité de division de faisceau (31), le réflecteur de mesure (33) mobile dans au moins une direction de mesure (x), le réflecteur de référence fixe (34) et une unité de concentration de rayons (31) et la division du faisceau de rayons (S) en un faisceau de rayons de mesure et un faisceau de rayons de référence (M, R) étant effectuée par l'unité de division de rayons (31) et la superposition des faisceaux de rayons de mesure et de référence (M, R), réfléchis par le réflecteur de mesure et de référence (33, 34), étant effectuée par l'unité de concentration de rayons (31) pour former le faisceau de rayons d'interférence (IF).

12. Dispositif selon la revendication 11, l'unité de division de rayons (31) et l'unité de concentration de rayons (31) étant formés conjointement dans un cube séparateur de rayons.

13. Dispositif selon l'une au moins des revendications précédentes, l'unité de détection (40) comportant au moins un élément de division (41, 42), au moins un élément de polarisation (43) et un réseau de détecteurs aval (46) comprenant au moins neuf éléments de détection optoélectroniques (46.1,..., 46.9) et une division, dépendant de la longueur d'onde, du faisceau de rayons d'interférence (IF) en au moins trois groupes de faisceaux de rayons d'interférence ($IF_{90}$, $IF_{210}$, $IF_{330}$) étant effectuée par l'au moins un élément de division (41, 42) et l'au moins un élément de polarisation (43) et chacun des au moins trois groupes de faisceaux de rayons d'interférence ($IF_{90}$, $IF_{210}$, $IF_{330}$) comprenant au moins trois faisceaux de rayons d'interférence partiels déphasés.

14. Dispositif selon la revendication 13, l'unité de détection (40) comprenant deux éléments de division (41, 42) et une division en plusieurs faisceaux de rayons d'interférence déphasés ($IF_{90}$, $IF_{210}$, $IF_{330}$) étant effectuée par un élément de division (41) et une division, dépendant de la longueur d'onde, en plusieurs faisceaux de rayons d'interférence partiels étant effectuée par l'autre élément de division (42).

15. Dispositif selon l'une au moins des revendications précédentes, l'unité de traitement de signal (50) étant conçue pour

- déterminer par longueur d'onde ($\lambda_1$, $\lambda_2$, $\lambda_3$) une valeur de phase ($\Phi_{\lambda1}$, $\Phi_{\lambda2}$, $\Phi_{\lambda3}$) à partir des signaux d'interférence partiels électriques déphasés ($S_{\lambda1\_90}$, $S_{\lambda1\_210}$, $S_{\lambda1\_330}$, $S_{\lambda2\_90}$, $S_{\lambda2\_210}$, $S_{\lambda2\_330}$, $S_{\lambda3\_90}$, $S_{\lambda3\_210}$, $S_{\lambda3\_330}$) de différentes longueurs d'onde ($\lambda_1$, $\lambda_2$, $\lambda_3$),
- former à partir des valeurs de phase ($\Phi_{\lambda1}$, $\Phi_{\lambda2}$, $\Phi_{\lambda3}$) plusieurs phases différentielles ($\Delta\Phi_{12}$, $\Delta\Phi_{23}$ et $\Delta\Phi$) qui sont respectivement associées à des longueurs d'onde synthétiques différentes ($\Lambda_1$, $\Lambda_2$, $\Lambda_3$),
- déterminer une information de position absolue (L) à haute résolution par rapport au réflecteur de mesure (33) à partir d'un signal de position grossière (TOF), obtenu par le biais d'une mesure de position grossière supplémentaire, et des phases différentielles ($\Delta\Phi_{12}$, $\Delta\Phi_{23}$ et $\Delta\Phi$).

Fig. 1

Fig. 2

Fig. 3

Fig. 4a

Fig. 4b

Fig. 4c

Fig. 4d

Fig. 5

Fig. 6

Fig. 7

Fig. 8

EP 3 447 441 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6496266 B1
- US 5469265 A

- RO 130868 A2
- CN 103107478 B